# EUROPÄISCHE PATENTSCHRIFT

(11) **EP 2 371 677 B1**
(45) Veröffentlichungstag und Bekanntmachung des Hinweises auf die Patenterteilung: **23.07.2014**
(21) Anmeldenummer: 11157599.9
(22) Anmeldetag: 10.03.2011
(51) Int. Cl.: B62D 21/15

(54) **Aufprallschutzelement, dessen Verwendung und Verfahren zu dessen Herstellung**
Impact protection element, use of same and method for producing same
Elément de pare-chocs, son utilisation et procédé de fabrication

(30) Priorität: 31.03.2010 DE 102010003497
(43) Veröffentlichungstag der Anmeldung: 05.10.2011
(73) Patentinhaber: Benteler SGL GmbH & Co. KG, 33102 Paderborn (DE)
(72) Erfinder: Engertsberger, Rudolf, 4982, Mörschwang (AT); Zöpfl, Roland, 4910, Ried im Innkreis (AT)
(74) Vertreter: Ksoll, Peter

(56) Entgegenhaltungen:
- EP-A1- 1 607 272
- DE-A1- 10 037 593
- DE-A1- 10 159 067
- DE-A1-102008 015 960

## Beschreibung

Die vorliegende Erfindung betrifft ein Aufprallschutzelement, dessen Verwendung sowie ein Verfahren zu dessen Herstellung. Die vorliegende Erfindung betrifft insbesondere so genannte Crashabsorber mit oder in Hohlelementen mit oder aus Faserverbund, deren Fertigung und deren Verwendung auf dem Gebiet der Automobilindustrie, insbesondere bei der Fertigung und beim Aufbau selbsttragender Karosserien.

Bei der Fertigung von Fahrzeugen, insbesondere auf dem Gebiet der Automobilindustrie, sind Aufbauprinzipien für so genannte selbsttragende Karosserien von maßgeblicher Bedeutung nicht nur im Hinblick auf die Formgebung und die Fahrzeugstabilität als solcher, sondern auch im Hinblick auf den Schutz des Fahrzeuginnenraums, insbesondere einer Fahrgastzelle, z.B. auch bei außergewöhnlichen Belastungen und zur Abwehr von äußeren Einflüssen bei einem Unfall oder dergleichen.

Dabei kommen bestimmten Karosseriebestandteilen, z.B. den verschiedenen Säulen, insbesondere den A-, B-, C- und D-Säulen, aber auch dem so genannten Schweller besondere Bedeutung zu. Der Schweller selbst ist häufig kein eigenes Bauteil, sondern setzt sich oft aus einer Seitenwand oder einem Seitenteil, einem Verstärkungsteil, einem Verstärkungsstegblech und einem Schwellerinnenteil zusammen, wobei letzteres den Hohlquerschnitt insgesamt schließt.

Wie oben bereits erwähnt wurde, ist der Schweller ein wichtiger Bestandteil einer selbsttragenden Karosserie, weil ihm einerseits die Aufnahme so genannter Lastpfade bei einem Frontalzusammenstoß zukommt, andererseits jedoch auch maßgebliche Stabilitäts- und Energiedissipationsaufgaben im Zusammenhang mit dem Seitenaufprallschutz beigemessen werden.

Aufgrund dieser Umstände haben sich aus Metallen gefertigte Karosseriebestandteile und insbesondere die Schweller zumindest teilweise als nachteilig erwiesen, weil ihre Lage und insbesondere ihre Bodennähe und somit der Einfluss von Wasser im Zusammenhang mit Verschmutzungen wie Salz oder dergleichen, häufig zu Korrosionsproblemen führen, welche - über die Zeit gesehen - eine Beeinträchtigung der Funktionalität derartiger Komponenten selbsttragender Karosserien mit sich bringt, sofern nicht ein erheblicher Aufwand zu deren Schutz und Wartung ergriffen wird.

Andererseits ist es gerade im Hinblick auf die Schutzaspekte bei einem Seitenaufprall wichtig, einerseits die Fahrzeugintegrität und -stabilität insgesamt zu gewährleisten, andererseits jedoch aufgrund der Schutzfunktion in Bezug auf den Fahrzeuginnenraum eine nicht zu hohe Quersteifigkeit zu wählen, um beim Aufprall von der Seite her gezielt kinetische Energie abbauen zu können und somit Eindringgeschwindigkeiten bei derartigen Querbewegungen der Karosserie oder Teilen davon in Richtung auf den Fahrzeuginnenraum hin zu reduzieren.

DE102008015960A1 wird als nächstliegender Stand der Technik gesehen. Es offenbart ein Aufprallschutzelement für eine Fahrzeugkarosserie zur Aufnahme und/oder Dissipation kinetischer Energie bei einem Aufprall, welches ein Hohlkörperelement mit oder aus einem Faserverbund aufweist, wobei das Hohlkörperelement ein einer vermuteten Aufprallrichtung zugewandtes vorderes Wandelement und ein der vermuteten Aufprallrichtung abgewandetes hinteres Wandelement aufweist, wobei das Hohlkörperelement in seinem Inneren ein oder mehrere Stabilisierungs-/Stauchelemente aufweist, wobei die ein oder mehreren Stabilisierungs-/Stauchelemente an den Innenseiten der der *vermuteten* Aufprallrichtung zugewandten und abgewandten vorderen bzw. hinteren Wandelemente angebracht sind und wobei ein oder mehrere Stabilisierungs-/Stauchelemente in Form eines Hohlkörpers ausgebildet sind.

Der Erfindung liegt die Aufgabe zu Grunde, ein Aufprallschutzelement für eine Fahrzeugkarosserie zur Aufnahme und Dissipation kinetischer Energie bei einem Aufprall sowie dessen Herstellung und Verwendung anzugeben, bei welchen auf besonders einfach herstellbare Art und Weise und mit besonders hoher Qualität und Haltbarkeit ein besonders zuverlässiger Seitenaufprallschutz bei einem Fahrzeug realisierbar ist.

Die der Erfindung zu Grunde liegenden Aufgaben werden bei einem Aufprallschutzelement erfindungsgemäß mit den Merkmalen des Anspruchs 1 gelöst. Ferner werden die der Erfindung zugrunde liegenden Aufgaben bei einem Verfahren zum Herstellen eines Aufprallschutzelementes erfindungsgemäß mit den Merkmalen des Anspruchs 16 gelöst. Darüber hinaus werden die der Erfindung zugrunde liegenden Aufgaben auch mit der Verwendung des erfindungsgemäßen Aufprallschutzelements nach Anspruch 23 gelöst. Vorteilhafte Weiterbildungen sind jeweils Gegenstand der abhängigen Ansprüche.

Die vorliegende Erfindung schafft zum einen ein Aufprallschutzelement für eine Fahrzeugkarosserie zur Aufnahme und/oder Dissipation kinetischer Energie bei einem Aufprall, welches ein Hohlkörperelement mit oder aus einem Faserverbund aufweist, wobei das Hohlkörperelement ein einer vermuteten Aufprallrichtung X zugewandtes vorderes Wandelement und ein der vermuteten Aufprallrichtung X abgewandetes hinteres Wandelement aufweist, wobei das Hohlkörperelement in seinem Inneren ein oder mehrere Stabilisierungs-/Stauchelemente aufweist, wobei die ein oder mehreren Stabilisierungs-/Stauchelemente an den Innenseiten der der vermuteten Aufprallrichtung X zugewandten und abgewandten vorderen bzw. hinteren Wandelemente angebracht sind und a) wobei ein oder mehrere Stabilisierungs-/Stauchelemente in Form eines Hohlkörpers ausgebildet sind und b) wobei ein oder mehrere Stabilisierungs-/Stauchelemente in Form eines mehrfach undulierten Zwischenwandelements ausgebildet sind.

Kernideen, welche dem erfindungsgemäßen Aufprallschutzelement zugrunde liegen, sind also das Vorsehen eines Hohlkörperelements mit oder aus einem Faserverbund, welcher auch als kohlenstofffaserverstärktes Material oder kohlenstofffaserverstärktes Kunststoffmaterial aufgefasst und bezeichnet werden kann, aber nicht muss, wobei in diesem in seinem Inneren ein oder mehrere Stabilisierungs-/Stauchelemente vorgesehen sind, wobei diese - insbesondere mit ihren Stirnseiten oder Stirnflächen - an den Innenseiten vorgesehener der vermuteten Aufprallrichtung zu- bzw. abgewandten vorderen bzw. hinteren Wandelementen angebracht sind. Erfindungsgemäß bestehen die ein oder mehreren Stabilisierungs-/Stauchelemente aus einem Hohlkörper und einem mehrfach undulierten, geknickten oder gefalteten Zwischenwandelement. Die Energiedissipation wird also nicht durch die dem erfindungsgemäßen Aufprallschutzelement zugrunde liegenden Hohlkörperform und das Vorsehen eines Faserverbunds für die Hohlkörperform allein erreicht, sondern auch durch die hier erfindungsgemäß ausgebildete Innenstruktur mit ein oder mehreren an den Innenseiten angebrachten Stabilisierungs-/Stauchelementen und deren Form als Hohlkörper und mit dem als mehrfach undulierte oder gefaltete Zwischenwandelemente.

Der Hohlkörper eines Stabilisierungs-/Stauchelements kann mit konstantem Durchmesser oder Querschnitt ausgebildet sein, insbesondere von einer der vermuteten Aufprallrichtung X abgewandten Seite zu einer der vermuteten Aufprallrichtung X zugewandten Seite verlaufend hin. Die Hohlkörper für die Stabilisierungs-/Stauchelemente können also einen Verlauf mit einem konstanten Querschnitt, quasi in zylindrischer Form oder dergleichen aufweisen, wobei die Stauch-Richtung, also die vermutete Aufprallrichtung im Wesentlichen in Richtung der Mantelfläche verläuft.

Der Hohlkörper eines Stabilisierungs-/Stauchelements kann die Form eines Zylinders - insbesondere mit kreisförmiger und/oder elliptischer End- oder Grundfläche - Quaders und/oder Prismas - insbesondere mit Endflächen in Form eines regelmäßigen oder unregelmäßigen n-Ecks aufweisen, insbesondere jeweils in senkrechter oder schiefer Form. Es bieten sich also hier grundsätzlich jegliche Hohlkörperformen an, die einen konstanten Querschnitt oder Durchmesser besitzen.

Der Hohlkörper eines Stabilisierungs-/Stauchelements kann konisch oder verjüngend verlaufend ausgebildet sein, insbesondere von einer der vermuteten Aufprallrichtung X abgewandten Seite zu einer der vermuteten Aufprallrichtung X zugewandten Seite verlaufend hin. Andererseits sind also auch - und dies bevorzugt - die Klasse sich verjüngend erstreckender oder konischer geometrischer Körper einsetzbar, also Körper, die auf die vermutete Aufprallrichtung zu, d.h. also von der vom vermuteten Aufprall abgewandten Seite zu der dem vermuteten Aufprall zugewandten Seite hin einen sich verringernden Querschnitt oder Durchmesser aufweisen.

Der Hohlkörper eines Stabilisierungs-/Stauchelements kann die Form eines Stumpfs eines geometrischen Körpers aufweisen, vorzugsweise eines Kegelstumpfs - insbesondere mit kreisförmigen und/oder elliptischen End- oder Grundflächen - oder eines Pyramidenstumpfs - insbesondere mit Endflächen in Form eines z.B. regelmäßigen oder unregelmäßigen n-Ecks, insbesondere von einer der vermuteten Aufprallrichtung X abgewandten Seite zu einer der vermuteten Aufprallrichtung X zugewandten Seite verlaufend hin. Allgemein sind also alle im Wesentlichen stumpfartigen geometrischen Körper bei der Ausgestaltung der Hohlkörper für die Stabilisierungs-/Stauchelemente denkbar. Auch hier verläuft die vermutete Aufprallrichtung und insofern die Stauchrichtung im Wesentlichen in der Mantelfläche.

Der Hohlkörper eines Stabilisierungs-/Stauchelements kann mit oder aus mindestens einem Faserverbund ausgebildet sein. Dabei können der Faserverbund für den Hohlkörper des Aufprallschutzelements und für die Hohlkörper der Stabilisierungs-/Stauchelemente gleich oder unterschiedlich ausgebildet sein; jedoch eignet sich die Ähnlichkeit der Materialien auf jeden Fall, um die Stabilisierungs-/Stauchelemente an den Innenseiten des Hohlkörpers des Aufprallschutzelements anzubringen.

Der Hohlkörper eines Stabilisierungs-/Stauchelements kann in seinem Inneren mit einem Material gefüllt ist, insbesondere mit einem geschäumten Material, vorzugsweise mit einem Polymermaterial, Metallmaterial, PU- oder Polyurethanmaterial. Eine materielle Füllung im Inneren der Hohlkörper der Stabilisierungs-/Staucheleimente kann für eine weitere Versteifung und Energiedissipation förderlich sein. Diese könnte auch mit dem gleichen Thermoplast wie der Hauptkern gefertigt sein, und wäre insbesondere auch ausschmelzbar, wie beim Hauptbauteil.

Es kann auch eine Anordnung einer Mehrzahl von Stabilisierungs-/Stauchelementen in Form von Hohlkörpern vorgesehen sein, insbesondere in Form ein oder mehrerer Reihen, die sich senkrecht zur vermuteten Aufprallrichtung X und/oder in einer Längserstreckungsrichtung Y des Hohlkörperelements des Aufprallschutzelements erstrecken. Die Anordnung der Mehrzahl von Stabilisierungs-/Stauchelementen kann in geeigneter Art und Weise dem Hohlkörper des eigentlichen Aufprallschutzelements folgen, insbesondere dann, wenn dieser sich über unterschiedlich belastete Abschnitte der zugeordneten Fahrzeugkarosserie erstreckt oder selbst in seinem Hohlkörperquerschnitt variiert.

Ein jeweiliger Hohlkörper eines Stabilisierungs-/Stauchelements in Hohlkörperform kann mit den Außenseiten vorderer bzw. hinterer Wandelemente als Endflächen an den Innenseiten der der vermuteten Aufprallrichtung X zu- bzw. abgewandten vorderen und hinteren Wandelemente des Hohlkörperelements des Aufprallschutzelements angebracht ist. Die Endflächen der Hohlkörper der Stabilisierungs-/Stauchelemente bieten aufgrund ihrer Flächenartigkeit einen besonders guten Ansatz zum Anbringen an den Innenseiten des Hohlkörpers des Aufprallschutzelements.

Eine Undulationsrichtung U der Undulation oder des undulierten Abschnitts eines Stabilisierungs-/Stauchelements in Form eines mehrfach undulierten Zwischenwandelements kann vorzugsweise zur vermuteten Aufprallrichtung X und/oder zu einer Längserstreckungsrichtung Y des Hohlkörperelements des Aufprallschutzelements senkrecht verlaufen. Der Wellenverlauf des Zwischenwandelements eines Stabilisierungs-/Stauchelements erstreckt sich somit vorteilhafterweise in der Erstreckungsrichtung des Hohlkörpers des Aufprallschutzelements, so dass die eine Kante oder Stirnseite des unduliert verlaufenden Zwischenwandelements vermuteten Aufprallrichtung zugewandt und die andere Kante oder Stirnseite des mehrfach undulierten Zwischenwandelements der vermuteten Aufprallrichtung abgewandt ist. Die Richtung des Aufpralls und damit die Stauchrichtung verlaufen also im Wesentlichen in der mehrfach undulierten Fläche des Zwischenwandelements.

Ein mehrfach unduliertes Zwischenwandelement eines Stabilisierungs-/Stauchelements kann eine Vorderkante und eine Hinterkante aufweisen, welche an den Innenseiten der der vermuteten Aufprallrichtung X zu- bzw. abgewandten vorderen bzw. hinteren Wandelemente des Hohlkörperelements des Aufprallschutzelements angebracht sind. Aufgrund ihrer Flächenhaftigkeit, wenn auch diese geringer ist als bei den hohlkörperartigen Stabilisierungs-/Stauchelementen, bietet einen guten Ansatz zur Befestigung und zum Anbringen an den Innenseiten des Hohlkörpers des Aufprallschutzelements.

Ein mehrfach unduliertes Zwischenwandelement eines Stabilisierungs-/Stauchelements kann einen mehrfach undulierten Abschnitt aufweisen oder von einem solchen gebildet werden. Dieser kann im Querschnitt mit einem Verlauf in Form eines einfachen oder mehrfachen Sägezahns, mit schrägen und/oder senkrechten Flanken, in Form einer einfachen oder mehrfachen Stufe, in Form eines einfachen oder mehrfachen Ovals oder einer einfachen oder mehrfachen abgerundeten Stufe, einer einfachen oder mehrfachen Wellenform, einer einfachen oder mehrfachen Sinusform oder Kombinationen daraus ausgebildet sein. Es bieten sich also beliebige Verlaufsformen für die Undulation an, wobei diese unterschiedlichen Verlaufsformen auch miteinander gemischt werden können. Es können auch mehrere und - wenn diese identisch sind - quasi parallel verlaufende Zwischenwandelemente vorgesehen sein.

Ein mehrfach unduliertes Zwischenwandelement eines Stabilisierungs-/Stauchelements kann mit oder aus mindestens einem Faserverbund ausgebildet sein. Auch bei den undulierten Zwischenwandelementen bietet sich aufgrund der Ähnlichkeit des Faserverbunds mit dem Faserverbund des Hohlkörpers des Aufprallschutzelements eine besonders einige Verbindung der Stabilisierungs-/Stauchelemente an den Innenseiten des Hohlkörpers des Aufprallschutzelements an.

Das Innere des dem erfindungsgemäßen Aufprallschutzelement zugrunde liegenden Hohlkörperelements kann teilweise oder vollständig mit einem Kernmaterial gefüllt sein, wobei das Kernmaterial insbesondere ein oder mehrere Stabilisierungs-/Stauchelemente einbettet. Eine Füllung vereinfacht den Herstellungsprozess unter Umständen erheblich, weil es Herstellungsvorgänge gibt, bei welchen zunächst die Füllung als Kernmaterial vorgelegt wird, dann die ein oder mehreren Stabilisierungs-/Stauchelemente in die Füllung eingebracht werden und dann die so erhaltene Struktur mit dem entsprechenden Faserverbund umhüllt wird. Bei der richtigen Wahl des Füllstoffs erübrigt sich also, sofern gefüllte Hohlelemente für die Aufprallschutzelemente bevorzugt sind, ein Auslassen des Kernmaterials.

Ein jeweiliger Faserverbund kann aufweisen oder gebildet sein oder werden von ein oder mehreren Materialien aus der Gruppe, die aufweist CFK-Materialien, Glasmaterialien, Aramidmaterialien, Naturfasermaterialien, Basaltmaterialien und deren Kombinationen.

Die vorliegende Erfindung schafft andererseits auch ein Verfahren zum Herstellen eines Aufprallschutzelements, insbesondere gemäß der vorliegenden Erfindung in der oben beschriebenen Art und Weise.

Das Verfahren weist die Schritte auf:
(A) Bereitstellen eines Kernmaterials,
(B) Bereitstellen eines oder mehrerer Stabilisierungs-/Stauchelemente,
(C) Einbetten der Stabilisierungs-/Stauchelemente im Kernmaterial,
(D) teilweises oder vollständiges Umgeben der im Schritt (C) erhaltenen Struktur aus in einem Kernmaterial eingebetteter Stabilisierungs-/Stauchelemente mit einem Faserverbund oder einer Vorform eines Faserverbunds als Hülle,
(E) Imprägnieren der im Schritt (D) erhaltenen Struktur aus teilweise oder vollständig mit einem Faserverbund oder einer Vorform eines Faserverbunds als Hülle umgebener in einem Kernmaterial eingebetteter Stabilisierungs-/Stauchelemente mit einem Imprägniermittel und
(F) Verbinden der Stabilisierungs-/Stauchelemente mit der Innenseite der Hülle.

Das Verbinden der Stabilisierungs-/Stauchelemente mit der Innenseite der Hülle kann entweder simultan mit dem Prozess (E) des Imprägnierens - z.B. durch ein RTM-Verfahren unter Druck und/oder Temperatur - oder auch in einem separaten und zeitlich nachgeschalteten Schritt des Nachbearbeitens der im Schritt (E) erhaltenen Struktur erfolgen, z.B. beim VAP-Verfahren.

Bei der simultanen Verbindung der Stabilisierungs-/Stauchelemente mit der Innenseite der Hülle im Schritt E ist wesentlich, dass sowohl die Hauptlagen an der Außenseite des Hauptbauteilkernes, als auch die Faserlagen der Stabilisierungs-/Stauchelemente als Crashelemente bei der Imprägnierung durch das Harz oder dergleichen mitbenetzt werden - im gleichen Prozess und zur gleichen Zeit - und anschließend gemeinsam aushärten. Da die Fasern der Stabilisierungs-/Stauchelemente als Crashelemente an den Hauptlagen anliegen, ergibt sich damit ein über das Harz oder dergleichen ausgebildeter Faserverbundstoß, über welchen die eingeleiteten Kräfte von der Außenstruktur an die Crashelemente weitergegeben werden kann.

Ein Nachbearbeitungsschritt kann ein gegebenenfalls notwendiges Auslösen von Kerne beinhalten.

Ein Kernaspekt des erfindungsgemäßen Herstellungsverfahrens ist also das Bereitstellen des Kernmaterials und der ein oder mehreren Stabilisierungs-/Stauchelemente in im Kernmaterial eingebettete Art und Weise und dem nachfolgenden teilweisen oder vollständigen Umgeben der so erhaltenen eingebetteten Struktur, so dass entweder simultan beim Imprägnieren oder bei einem nachfolgenden Nachbearbeitungsschritt automatisch eine Verbindung hergestellt wird zwischen der Innenseite des ausgebildeten Hohlkörpers des Aufprallschutzelements und der im Inneren vorgesehenen Stabilisierungs-/Stauchelemente. Es entfällt somit ein nachträgliches Einbringen und Befestigen der Stabilisierungs-/Stauchelemente in eine vorgelegte Hohlkörperform.

Das Einbetten (C) der Stabilisierungs-/Stauchelemente im Kernmaterial kann erfolgen, indem im bereitgestellten Kernmaterial ein oder mehrere zu den Stabilisierungs-/Stauchelementen passende Hohlräume geschaffen und dann die Stabilisierungs-/Stauchelemente in die Hohlräume eingelegt oder eingebracht werden. Das Kernmaterial wird hierbei also vorgelegt und mit ein oder mehreren Hohlräumen, welche der Kontur der ein oder mehreren Stabilisierungs-/Stauchelemente entsprechen, versehen, in welche dann die ein oder mehreren Stabilisierungs-/Stauchelemente eingebracht werden, um dann hinterher mit dem Faserverbund für den Hohlkörper des Aufprallschutzelements umhüllt zu werden.

Das Einbetten (C) der Stabilisierungs-/Stauchelemente im Kernmaterial kann aber alternativ auch erfolgen, indem das eine oder die mehreren Stabilisierungs-/Stauchelemente vorgelegt und dann mit dem bereitgestellten Kernmaterial umgeben werden. Diese Vorgehensweise ist unter Umständen einfacher, da einfach die vorzusehenden ein oder mehreren Stabilisierungs-/Stauchelemente vorgelegt werden, um dann zunächst in das vorzusehende Kernmaterial eingebettet zu werden, woran sich dann ein Umhüllen mit dem Faserverbund für den Hohlkörper des Aufprallschutzelements anschließt.

Das teilweise oder vollständige Umgeben (D) mit einem Faserverbund oder einer Vorform eines Faserverbunds kann erfolgen, indem die Einbettungsstruktur aus Kernmaterial und einem oder mehreren Stabilisierurigs/Stauchelementen mit dem Faserverbund oder der Vorform davon umhüllt, umflochten, umwickelt und/oder belegt wird. Denkbar sind jegliche Verarbeitungsverfahren, die ein Umgeben der zuvor erzeugten Struktur mit den im Kernmaterial eingebetteten Stabilisierungs-/Stauchelementen ermöglicht.

Das Imprägnieren (E) der umhüllten Struktur kann erfolgen, indem das Imprägniermittel, insbesondere ein polymeres Matrixmaterial, vorzugsweise ein Harz oder ein Phenolharz, auf- oder eingebracht wird, insbesondere im Rahmen eines Infusionsverfahrens und/oder eines RTM-Verfahrens, z.B. einer Vakuuminfusion und/oder im Zusammenhang mit einem entsprechenden Imprägnierwerkzeug oder einer Imprägnierform, vorzugsweise in geschlossener Gestalt.

Bei der Nachbearbeitung (F) kann die imprägnierte und umhüllte Struktur ausgehärtet werden, insbesondere unter Anwendung von Temperatur und/oder Druck.

Alternativ oder zusätzlich kann bei der Nachbearbeitung (F) das in der imprägnierten umhüllten Struktur enthaltene Kernmaterial ausgelöst werden, insbesondere durch Anwenden eines Temperaturschritts durch Schmelzen oder durch chemische Insultien, so dass zumindest ein Teil des Inneren des Hohlelements des Aufprallschutzelements mit einem oder mehreren Hohlräumen verbleibt.

Die Anbindung der Crashabsorber, also der Stabilisierungs-/Stauchelemente an das Hauptbauteil kann wie folgt erfolgen:
A: Faserlagen werden bei den Kegeln nach innen geschlagen und hüllen das Bauteil an den Stirnseiten ein. Dies ist bei Hohlkörperformen möglich.
B: Faserlagen werden nach außen geschlagen und bilden quasi Flügel, die sich an die Hauptfaserlagen anlegen, dazu muss der Hauptbauteilkern entsprechende Ausnehmungen haben. Dies ist bei Hohlkörperformen und bei Zwischenwandelementen möglich.
C: Eine Mischung aus A und B, ein Teil wird nach innen, ein Teil nach außen geschlagen. Dies ist bei Hohlkörperformen möglich.

In der Hohlkörperform eines Stabilisierungs-/Stauchelements kann der Stützkern im Hohlbauteil verbleiben, wenn er z.B. aus geschäumten Materialien ist. Ist der Kern aus demselben auslösbaren Material wie den Hauptbauteilkern, kann er ebenfalls ausgelöst werden.

Das erfindungsgemäße Aufprallschutzelement wird insbesondere in einem Fahrzeug, vorzugsweise als Teil oder in einem Teil der Fahrzeugkarosserie, vorzugsweise als Schweller in einem Kraftfahrzeug verwendet.

Diese und weitere Aspekte werden auf der Grundlage der beigefügten Zeichnungen erläutert.
- Fig. 1, 2: zeigen in schematischer und geschnittener Seitenansicht zwei Ausführungsformen des erfindungsgemäßen Aufprallschutzelements, bei welchem die Stabilisierungs-/Stauchelemente in Hohlkörperform ausgebildet sind.

- Fig. 3: zeigt in schematische und geschnittener Seitenansicht eine andere Ausführungsform des erfindungsgemäßen Aufprallschutzelements, bei welchem das Stabilisierungs-/Stauchelement als mehrfach unduliertes Zwischenwandelement ausgebildet ist.
- Fig. 4A - 6B: zeigen zu den Ausführungsformen der Fig. 1 bis 3 analoge erfindungsgemäße Aufprallschutzelemente jeweils in schematischer und geschnittener Seitenansicht bzw. schematischer und geschnittener Draufsicht.
- Fig. 7A - 8D: zeigen in schematischer und geschnittener Seitenansicht Ausführungsformen des erfindungsgemäßen Aufprallschutzelements auf der Grundlage von Hohlkörpern für die Stabilisierungs-/Stauchelemente, wobei die jeweiligen Hohlräume unterschiedlich gefüllt ausgebildet sind.
- Fig. 9A - C: zeigen in schematischer und geschnittener Seitenansicht verschiedene Details von Ausführungsformen des erfindungsgemäßen Aufprallschutzelements analog zu den Beispielen aus den Fig. 1 und 2.
- Fig. 10A, B: zeigen in schematischer und geschnittener Seitenansicht Details eines Aufprallschutzelements analog zu dem Beispiel aus Fig. 3.
- Fig. 11A - C: zeigen in schematischer und geschnittener Draufsicht verschiedene Ausführungsformen eines erfindungsgemäßen Aufprallschutzelements mit unterschiedlichen Anordnungen beim Vorsehen einer Mehrzahl von Stabilisierungs-/Stauchelementen in Hohlkörperform.
- Fig. 12A - F: zeigen in schematischer und geschnittener Draufsicht verschiedene Querschnittsformen für hohlkörperbasierte Stabilisierungs-/Stauchelemente, die bei dem erfindungsgemäßen Aufpralischutzelement verwendet werden können.
- Fig. 13A - F: zeigen in schematischer und geschnittener Draufsicht verschiedene Anordnungen für erfindungsgemäße Aufprallschutzelemente, bei welchen unterschiedliche als mehrfach undulierte Zwischenwandelemente ausgebildete Stabilisierungs-/Stauchelemente einzeln oder in Kombination miteinander oder in Kombination mit hohlkörperartigen Stabilisierungs-/Stauchelementen vorgesehen sind.
- Fig. 14: zeigt eine Verwendung des erfindungsgemäßen Aufprallschutzelements als ein oder bei einem Schweller eines Kraftfahrzeugs.
- Fig. 15: ist ein Blockdiagramm, welches in schematischer Art und Weise ein Herstellungsverfahren für ein erfindungsgemäßes Aufprallschutzelement illustriert.
- Fig. 16A - F: zeigen in schematischer und geschnittener Draufsicht verschiedene Stadien bei der Herstellung eines erfindungsgemäßen Aufprallschutzelements gemäß einer Ausführungsform des erfindungsgemäßen Herstellungsverfahrens.
Nachfolgend werden Ausführungsformen der vorliegenden Erfindung beschreiben. Sämtliche Ausführungsformen der Erfindung und auch ihre technischen Merkmale und Eigenschaften können einzeln isoliert oder wahlfrei zusammengestellt miteinander beliebig und ohne Einschränkung kombiniert werden.

Strukturell und/oder funktionell gleiche, ähnliche oder gleich wirkende Merkmale oder Elemente werden nachfolgend im Zusammenhang mit den Figuren mit denselben Bezugszeichen bezeichnet. Nicht in jedem Fall wird eine detaillierte Beschreibung dieser Merkmale oder Elemente wiederholt.

Zunächst wird auf die Zeichnungen im allgemeinen Bezug genommen.

Die vorliegenden Erfindung betrifft Aufprallschutzelemente und insbesondere so genannte Crashabsorber in Hohlelementen aus einem oder mehreren Faserverbundwerkstoffen und insbesondere die Fertigung so genannter Crashabsorber in Hohlelementen aus Faserverbundwerkstoffen.

Zielsetzung der vorliegenden Erfindung ist unter anderem die Schaffung eines verbesserten Aufprallschutzes, nämlich unter anderem durch Verstärkung eines aus einem oder mehreren Faserverbundwerkstoffen gefertigten Hohlbauteils, insbesondere als Strukturelement, vorzugsweise für eine Fahrzeugkarosserie. Das vorzusehende Bauteil ist in Hohlbauweise ausgebildet und wird insbesondere mit einem lösbaren oder auslösbaren Kern konzipiert, so dass sich die Herstellung in im Wesentlichen einem einzigen Arbeitsgang ergibt.

Die Herstellung des Bauteils als erfindungsgemäßes Aufprallschutzelement in einem Arbeitsgang mit einem oder mehreren in einem lösbaren Kern eingelassenen Verstärkungselementen bietet zum einen verfahrenstechnische Vorteile im Sinne einer Zeit- und/oder Materialersparnis und führt darüber hinaus zu besonders stabilen und die kinetische Energie bei einem Aufprall besonders gut dissipierende Strukturen.

Die Ausbildung im Hohlbauteil vorzusehender Elemente kann in verschiedenen Ausgestaltungen erfolgen, z.B. in Form eines mit einem Polyurethanmaterial gefüllten CFK-Materialhohlkörper, vorzugsweise in Konusform, oder in Form eines mehrfach undulierten Zwischenwandelements, vorzugsweise in Sinusform.

Als Anwendung bietet sich die Verwendung des erfindungsgemäßen Aufprallschutzelements im Bereich selbsttragender Karosserien, vorzugsweise bei Fahrzeugen und insbesondere Kraftfahrzeugen, z.B. bei PKWs an. Dabei kann insbesondere der so genannte Schweller als Hohlelement ausgebildet sein.

Die Fertigung kann erfindungsgemäß insbesondere in einem Schritt erfolgen, z.B. über geformte Fasern-Preformen im Rahmen eines Infusionsverfahrens - z.B. RTM zum Tränken und Aushärten.

Es können somit insbesondere für einen Seitenaufprall oder Seitencrash besonders geeignete Aufprallelemente oder Crashelemente als Komposite mit Kernen, z.B. aus Polyurethanmaterial, gefertigt werden. Die in dem Hohlkörper vorzusehenden Crashelemente, die erfindungsgemäß auch als Stabilisierungs-/Stauchelemente bezeichnet werden, können verjüngend, insbesondere konisch, mit beliebiger Grundfläche ausgebildet sein, z.B. rund, oval, eckig oder dergleichen.

Alternativ oder zusätzlich sind Crashelemente oder Stabilisierungs-/Stauchelemente in Form gewölbter Zwischenwände denkbar, die z.B. wellenförmig, eckig, auf jeden Fall jedoch ein oder mehrfach unduliert ausgebildet sind. Der Verlauf der Undulationsrichtung ist dabei senkrecht zur Aufprall- oder Crashrichtung, so dass eine Stirnseite oder Kante der mehrfach undulierten Zwischenwand oder der gewölbten Wand der vermuteten Aufprallrichtung zugewandt oder abgewandt ausgebildet ist.

Je nach Anwendung können undulierte Formen, z.B. auch Sinusformen für das Zwischenelement besonders bevorzugt sein. Die Sinusform wird dabei in den lösbaren Kern vor der Bauteilfertigung eingebracht. Nach der Infusion des Bauteils zur Behandlung mit einem Imprägniermittel, z.B. zur Harzbehandlung, kann dann der Kern ausgeschmolzen werden. Danach liegt dann die mehrfach undulierte Zwischenwand, z.B. von Sinusform, im eigentlichen Hohlbauteil für das erfindungsgemäße Aufprallschutzelement frei und ist nur an seinen Kanten oder Stirnseiten mit der Innenseite des Hohlbauteils als Hauptbauteil verbunden.

Die Infusion und folglich die Herstellung des Hohlkörpers für das Aufprallschutzelement erfolgen somit in einem Arbeitsgang, wobei das Bauteil an sich, genauso wie die Verstärkung, in dieser Fertigungsart gemeinsam infusioniert werden. Das heißt, nach Ummanteln der hohlkörperförmigen Stabilisierungs-/Stauchelemente mit dem den Hohlkörper bildenden Material findet eine gemeinsame Behandlung mit einem Imprägniermittel, z.B. einem Harz oder Phenolharz statt, so dass neben der eigentlichen Hülle für den Hohlkörper des Aufprallschutzelements auch die dort innen liegenden Stabilisierungs-/Stauchelemente mit dem Imprägniermittel, z.B. dem Harz oder Phenolharz, getränkt und nachfolgend ausgehärtet werden können.

Bei der Ausführung in Konusform kann dabei bei der Herstellung in einem vorgelegten lösbaren Kern vor der Bauteilfertigung ein oder eine Mehrzahl von Stabilisierungs-/Stauchelementen in Konusform eingebracht werden. Das Gleiche gilt natürlich auch für im Wesentlichen zylindrische ausgebildete Stabilisierungs-/Stauchelemente. Dabei wird dann nach dem Eindringen in den lösbaren Kern die so erhaltene Struktur mit dem Faserverbund, z.B. CFK-Material für den Hohlkörper des Aufprallschutzelements umgeben, imprägniert und ausgehärtet.

Zur Herstellung der zylinderförmigen oder konusförmigen hohlkörperartigen Stabilisierungs-/Stauchelemente wird jeweils ein entsprechend geformter Kern vorgelegt, der aus einem auslösbaren Material oder aus einem im Bauteil verbleibenden Material (z.B. einem Schaumstoff) ausgebildet sein kann. Es wird entsprechend ein Umhüllungsmaterial um diesen vorgelegten Kern aufgebracht, z.B. ein Fasermaterial, vorzugsweise ein CFK-Material.

Nach dem oben beschriebenen Einbringen in das Kernmaterial für den Hohlkörper des Aufprallschutzelements erfolgt die Infusion. Nach der Infusion, also der Behandlung mit dem Imprägniermittel, vorzugsweise mit einem Harz oder Phenolharz, können dann auch der Kern oder das Kernmaterial für den Hohlkörper des Aufprallschutzelements und je nach Art der hohlkörperförmigen Stabilisierungs-/Stauchelemente auch deren Kern ausgeschmolzen werden. Die eigentlichen Stabilisierungs-/Stauchelemente liegen danach im Hohlbauteil für das erfindungsgemäße Aufprallschutzelement frei auf und sind nur an den Stirnseiten, d.h. also an den Endflächen des jeweils zugrunde liegenden hohlkörperförmigen Stabilisierungs-/Stauchelements mit dem Hauptbauteil in Form des Hohlkörpers für das erfindungsgemäße Aufprallschutzelement verbunden.

Auch hier erfolgen die Infusion und folglich die Herstellung des Hohlkörpers für das Aufprallschutzelement in einem Arbeitsgang, wobei wieder der Hohlkörper oder das Hohlbauteil für das erfindungsgemäße Aufprallschutzelement und die Verstärkung über die hohlkörperförmigen Stabilisierungs-/Stauchelemente in dieser Fertigungsart gemeinsam infusioniert, also mit dem Imprägniermittel, vorzugsweise dem Harz oder Phenolharz, behandelt und ausgehärtet werden.

Bei dieser Vorgehensweise wird also zunächst im Wesentlichen der Kern für den Hohlkörper des Aufprallschutzelements ausgebildet. Es werden dann die für die Stabilisierungs-/Stauchelemente benötigten Aussparungen vorgesehen. Die Aussparungen werden dann mit den Stabilisierungs-/Stauchelementen bestückt. Die so erhaltene Struktur wird mit dem Fasermaterial umhüllt, z.B. umflochten, umwickelt oder belegt.

Nach dem Aufbringen der Fasern wird das Bauteil z.B. in ein Werkzeug eingelegt und dann mit dem Imprägniermittel, z.B. dem Harz oder Phenolharz, infusioniert. Auf diese Art und Weise wird dann das Aufprallschutzelement gefertigt, z.B. in Form eines CFK-Körpers oder einer CFK-Struktur in Hohlform mit den entsprechenden ein oder mehreren Stabilisierungs-/Stauchelementen in ihrem Inneren.

Vorteil dieser Vorgehensweise ist, dass dabei die Stabilisierungs-/Stauchelemente genauso mit dem Imprägniermittel behandelt werden, wie die äußere Hülle, wobei mittels der Überlappungsstellen am Kontakt zwischen den Kanten oder Endflächen der Stabilisierungs-/Stauchelemente und dem zugrunde liegenden Hohlkörper ein kompaktes Bauteil entsteht, d.h. eine Verbindung zwischen der Innenseite oder Innenwand des Hohlkörpers des erfindungsgemäßen Aufprallschutzelements und der innen ausgebildeten ein oder mehreren Stabilisierungs-/Stauchelemente. Es entfällt somit erfindungsgemäß der Aufwand in einen vorgefertigten Hohlkörper nachträglich die Stabilisierungs-/Stauchelemente einzubringen, weil diese schon beim Infusions- oder Imprägniervorgang des Hauptbauteils mitgefertigt und an der Innenseite angebracht werden können.

Der Vorgang des Auslösens des Kernmaterials des Hohlkörpers des Aufprallschutzelements soll hier ganz allgemein verstanden werden. Bei einer Ausführungsform kann dieses Kernmaterial, welches die Stabilisierungs-/Stauchelemente zunächst umgibt, ausgeschmolzen werden, zumal dann, wenn es sich um einen thermoplastischen Kunststoff handelt. Denkbar ist z.B. hier auch das ausgelassene Material aufzufangen und wieder zu verwenden. Neben dem Ausschmelzen sind natürlich auch andere Möglichkeiten des Entfernens oder Auslösens des Kernmaterials denkbar, z.B. auf chemische Art und Weise.

Das Imprägnieren im entsprechenden Formwerkzeug kann z.B. mittels eines RTM-Verfahrens (resin transfer molding) durchgeführt werden, wobei die im Werkzeug eingebrachte umwickelte Struktur in dem Werkzeug durch Einbringen des Imprägniermittels, z.B. aus einer Vorkammer über Kolben mittels Kanäle im Formteil des Werkzeugs, mit dem Imprägniermittel behandelt und dann unter Anwendung von Druck und/oder Wärme ausgehärtet wird.

In diesem Zusammenhang kann auch ein allgemeiner Infusionsvorgang, der unter Druck erfolgt, verwendet werden, bei welchem mittels eines Vakuums im Werkzeug das Einbringen des Imprägniermittels unterstützt werden kann.

Es sind hier auch verschiedene Unterformen des RTM-Verfahrens denkbar, nämlich mit und ohne Vakuum, RTM-Light, Differenzdruck-RTM usw.

Nun wird im Detail auf die Zeichnungen Bezug genommen.

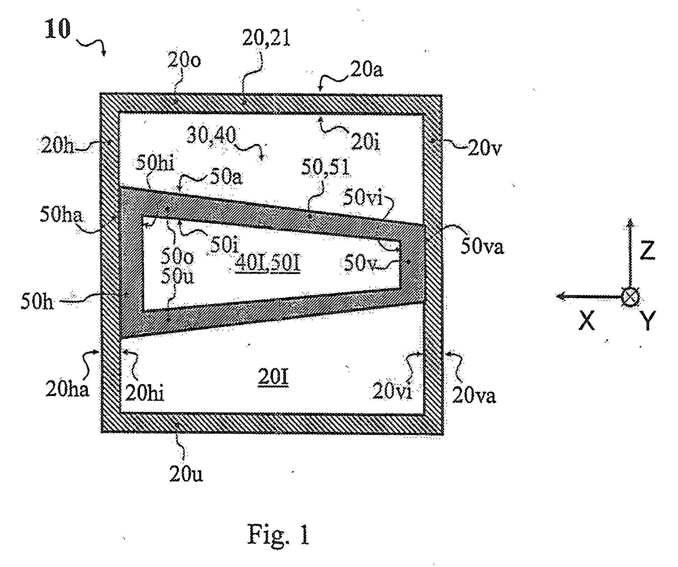

Fig. 1 zeigt in schematischer und geschnittener Seitenansicht eine erste Ausführungsform des Aufprallschutzelements 10. Dieses besteht aus einem Hohlkörperelement 20 aus einem CFK-Material 21, insbesondere also aus einem kohlenstofffaserverstärkten Kunststoffmaterial, und in Bezug auf die vermutete Aufprallrichtung X eine vordere Wand oder weist ein vorderes Wandelement 20v und eine hintere Wand oder ein hinteres Wandelement 20h sowie obere und untere Wände oder Wandelemente 20o bzw. 20u auf. Diese Wände oder Wandelemente 20v, 20h, 20o, 20u schließen einerseits das Innere 20I des dem Aufprallschutzelement 10 zugrunde liegenden Hohlkörpers 20 oder Hohlkörperelements 20 ein und bilden somit dessen Innenseite 20i oder Innenfläche 20i. Sie bilden aber andererseits auch die Außenseite 20a oder Außenfläche 20a des dem Aufprallschutzelement 10 zugrunde liegenden Hohlkörpers 20 oder Hohlkörperelements 20, wobei die Außenseite 20va oder Außenfläche 20va des vorderen Wandelements 20v der vermuteten Aufprallrichtung X zugewandt, die Außenseite 20ha oder Außenfläche 20ha des hinteren Wandelements 20h der vermuteten Aufprallrichtung X abgewandt ist.

Diese grundlegende Struktur ist für alle Ausführungsformen des Aufprallschutzelements 10 im Wesentlichen gleich und wird nicht in jedem Fall ihres Auftretens bei den einzelnen Ausführungsbeispielen des Aufprallschutzelements 10 wiederholt.

Bei der in Fig. 1 dargestellten Ausführungsform des Aufprallschutzelements 10 ist im Inneren 201 des Hohlkörpers 20 oder Hohlkörperelements 20 ein einzelnes Stabilisierungs-/Stauchelement 30 gezeigt, es können jedoch mehrere Stabilisierungs-/Stauchelemente 30 vorgesehen sein, die jeweils senkrecht zur Schnittrichtung vor und/oder hinter dem dargestellten Stabilisierungs-/Stauchelement 30 liegen.

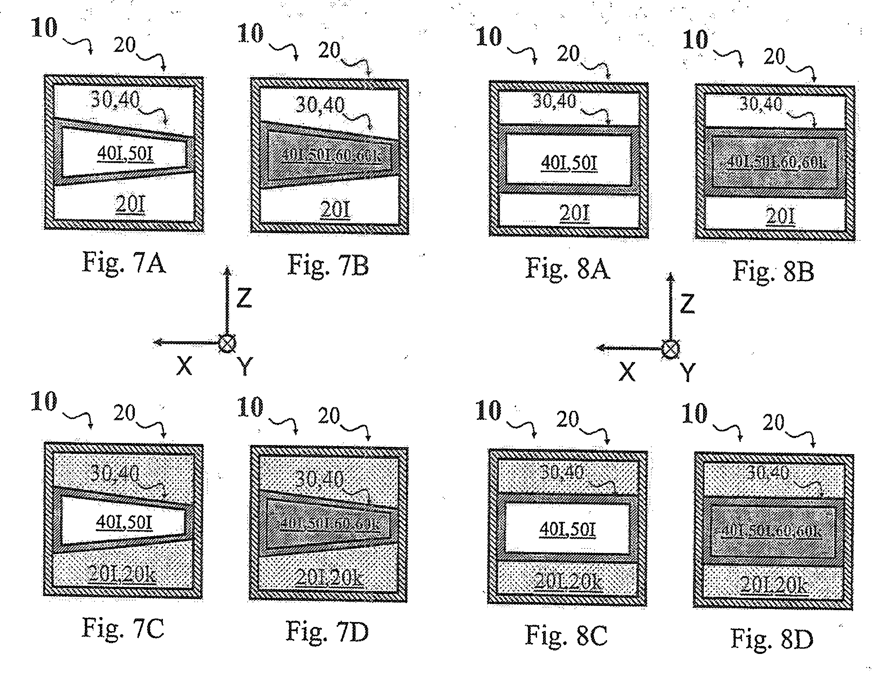

Bei der in Fig. 1 dargestellten Ausführungsform ist das im Inneren 20l des Hohlkörpers 20 oder Hohlkörperelements 20 vorgesehene Stabilisierungs-/Stauchelement 30 in Form eines Hohlkörpers 40 ausgebildet, nämlich mit einer Hülle 50, mit einer Außenseite 50a und einer Innenseite 50i, welche das Innere 40I, 50I umschließen und optional - siehe die Ausführungsformen gemäß den Fig. 7B, 7D, 8B, 8D - einen Kernbereich 60 oder ein Kernelement 60 mit einem entsprechenden Füll- oder Kernmaterial 60k aufweisen.

Die Hülle 50 selbst wird gebildet von einer oberen Wand 50o, einer unteren Wand 50u sowie einer in Bezug auf die vermutete Aufprallrichtung X zugewandten und vorderen Wand 50v und einer in Bezug auf die vermutete Aufprallrichtung X abgewandten und hinteren Wand 50h mit den entsprechend zugeordneten Außenseiten 50oa, 50ua, 50va, 50ha und Innenseiten 50oi, 50ui, 50vi bzw. 50hi.

Die Hülle 50 des Hohlkörpers 40 des Stabilisierungs-/Stauchelements 30 kann wiederum aus einem CFK-Material 51 gebildet sein, dieses kann sich von dem CFK-Material 21 des dem Aufprallschutzelement 10 zugrunde liegenden Hohlkörperelements 20 unterscheiden oder aber mit diesem identisch sein.

Ein weiterer wesentlicher Aspekt der vorliegenden Erfindung besteht darin, dass die Innenseiten 20vi und 20hi der vorderen und hinteren Wände oder Wandelemente 20v, 20h des dem Aufprallschutzelement 10 zugrunde liegenden Hohlkörpers 20 verbunden sind mit den Außenseiten 50va und 50ha der entsprechenden vorderen und hinteren Wände oder Wandelemente 50v bzw. 50h der Hohlkörperform 40 des vorgesehenen oder der vorgesehenen Stabilisierungs-/Stauchelemente 30 im Inneren I des zugrunde liegenden Hohlkörperelements 20.

Bei der Ausführungsform der Fig. 1 weist das Stabilisierungs-/Stauchelement 30 mit der Hohlkörperform 40 einen sich verjüngenden Verlauf auf, insbesondere eine konische Form, wobei sich die Hohlkörperform 40 von der der vermuteten Aufprallrichtung X abgewandten Seite zu der der vermuteten Aufprallrichtung X zugewandten Seite hin verjüngend erstreckt. Dies bedeutet für die Ausführungsform der Fig. 1, dass die hintere Wand 50h der Hülle 50 eine größere Grundfläche besitzt als die vordere Wand 50v.

Grundsätzlich sind jedoch auch Strukturen denkbar, bei welchen die Hohlkörperform 40 des oder der Stabilisierungs-/Stauchelemente 30 entlang der vermuteten Aufprallrichtung X querschnittsmäßig konstant oder im Wesentlichen konstant verlaufen.

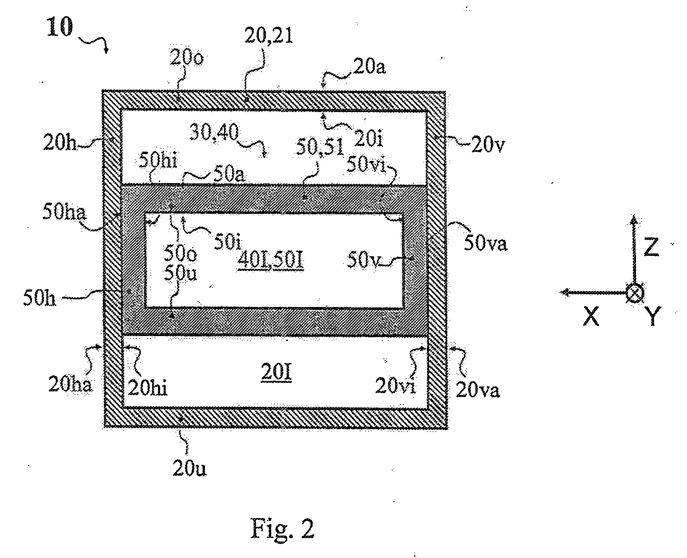

Dies ist in der Ausführungsform der Fig. 2 dargestellt, die ansonsten von ihrer Struktur her analog zu der Ausführungsform der Fig. 1 ausgebildet ist. Der Hohlkörper 40 des hier dargestellten Stabilisierungs-/Stauchelements 30 weist entlang der vermuteten Aufprallrichtung X, also in der Richtung Z in die vertikale bzw. entlang der Erstreckungsrichtung Y des dem erfindungsgemäßen Aufprallschutzelement 10 zugrunde liegenden Hohlkörperelements 20 einen im Wesentlichen konstanten Querschnitt auf. Dies bedeutet insbesondere, dass die vorderen und hinteren Wände 50v und 50h der Hülle 50 der Hohlkörperform 40 gleiche Flächen besitzen und insbesondere konform oder kongruent zueinander sind.

Die Grundflächenformen für die Hüllen 50 der Hohlkörper 40 der jeweiligen Stabilisierungs-/Stauchelemente 30 der Ausführungsformen aus den Fig. 1 und 2 sind hier z.B. als kreisförmig angenommen, so dass die Hohlkörperformen 40 bei den Fig. 1 und 2 als senkrechte Kegelstumpfform bzw. als senkrechte Zylinderform ausgebildet sind.

Denkbar sind einerseits auch schiefe Strukturen, bei denen also die Endflächen und mithin also die vorderen und hinteren Wände 50v bzw. 50h mit zueinander lateral versetzten Mittelpunkten ausgebildet sind.

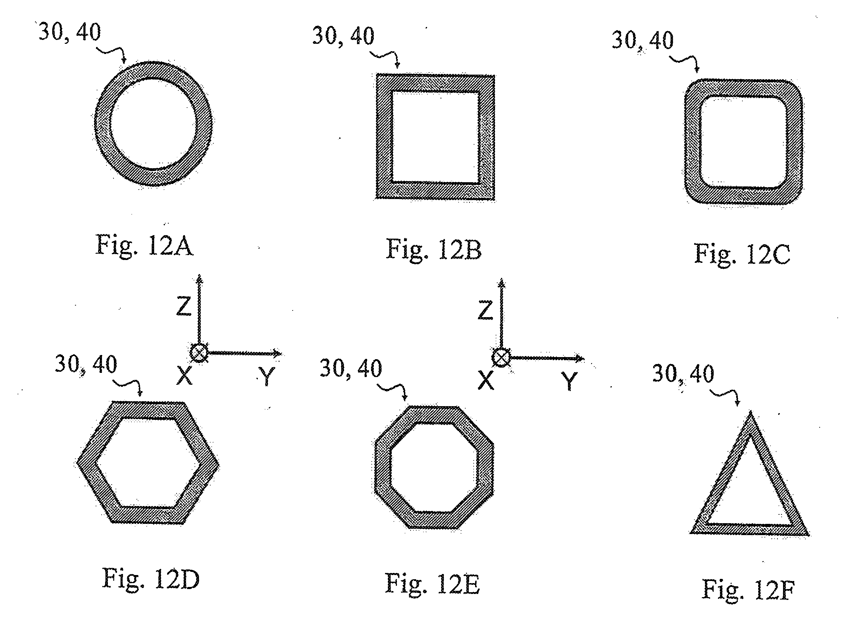

Andererseits sind auch andere Grundflächenformen, also Grundflächenformen, die von der Kreisform abweichen, denkbar, wie dies aus den Fig. 12A bis 12F hervorgeht. Einerseits können elliptische Grundflächen vorgesehen sein, andererseits polygonal begrenzte Grundflächen, wie dies im Zusammenhang mit den Fig. 12B mit einem Quadrat, 12D mit einem gleichförmigen Sechseck, 12E mit einem gleichförmigen Achteck und 12F mit einem gleichseitigen Dreieck illustriert ist. Auch sind allgemeinere Rechteckformen, Rauten, Trapeze, Drachen usw. denkbar. Die Ecken oder Kanten können, wie dies im Zusammenhang mit der Fig. 12C und der grundlegenden Quadratform dargestellt ist, abgerundet sein.

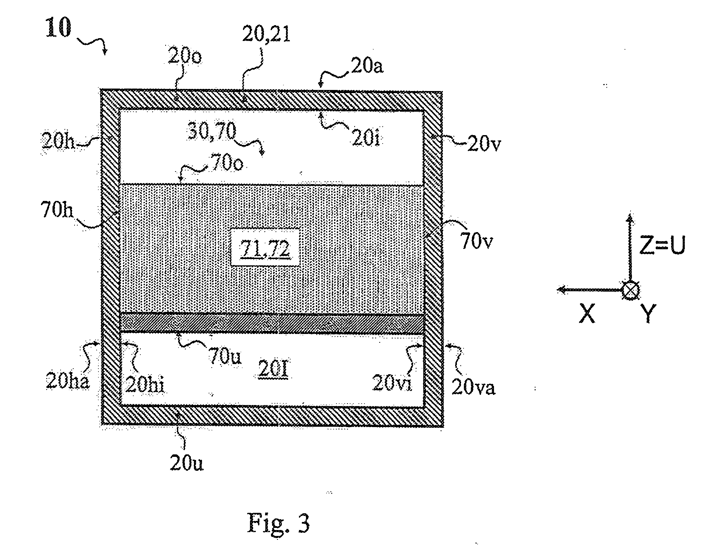

Die Fig. 3 zeigt eine andere Ausführungsform des Aufprallschutzelements 10, bei welcher anstelle der Hohlkörperform 40 für die Stabilisierungs-/Stauchelemente 30 eine Struktur vorgesehen ist, die den Aufbau eines mehrfach undulierten, gefalteten, geknickten oder gewellten Zwischenwandelements 70 besitzt.

Ganz allgemein wird von einer Undulation gesprochen. Damit sind sämtliche Strukturmaßnahmen gemeint, die eine Abweichung von einem planaren Zwischenwandelement bezeichnen. In der Fig. 3 ist die Undulationsrichtung U mit der vertikalen Richtung Z identisch, d.h. die Undulation selbst, d.h. die Wellenform, die Knicke, die Faltungen usw. erstrecken sich von einer planaren Struktur ausgehend in die Z-Richtung und somit senkrecht zur vermuteten Aufprallrichtung X und auch senkrecht zur Längserstreckungsrichtung Y des dem Aufprallschutzelement 10 zugrunde liegenden Hohlkörperelements 20.

In der Fig. 3, die ebenfalls eine schematische und geschnittene Seitenansicht dieser Ausführungsform des Aufprallschutzelements 10 zeigt, blickt man wie in den Fig. 1 und 2 auch in die Längserstreckungsrichtung Y auf die erfindungsgemäße Struktur.

Das mehrfach undulierte Zwischenwandelement 70 ist vorzugsweise aus einem CFK-Material 71 gefertigt und besitzt neben der Oberseite oder -fläche 70o und Unterseite oder -fläche 70u entsprechende Kantenbereiche oder Kantenflächen 70v, 70h, wobei insbesondere die der vermuteten Aufprallrichtung X zugewandte vordere Kantenseite 70v oder Kantenfläche 70v und die der vermuteten Aufprallrichtung X abgewandte hintere Kantenseite 70h oder Kantenfläche 70h wesentlich sind, weil diese gerade wieder mit den Innenseiten oder Innenflächen 20vi und 20hi der in Bezug auf die vermutete Aufprallrichtung X zugewandten bzw. abgewandten vorderen bzw. hinteren Wandelemente oder Wände 20v und 20h angebracht sind.

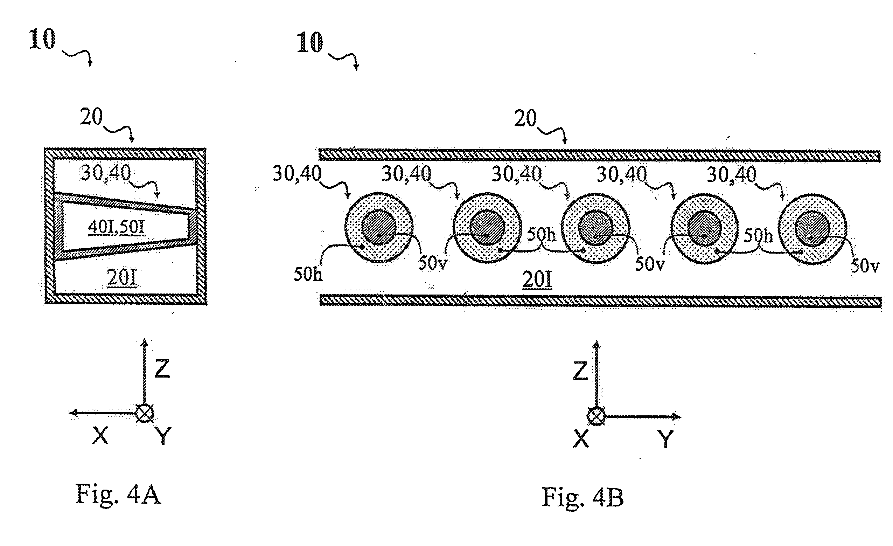

Die Fig. 4A bis 6B zeigen Strukturen für Aufprallschutzelemente 10 die mit den Strukturen der Fig. 1 bis 3 Gemeinsamkeiten haben. Die jeweils mit A bezeichneten Figuren zeigen wiederum eine schematische und geschnittene Seitenansicht in der Richtung Y, wogegen die mit B bezeichneten Figuren schematische und geschnittene Draufsichten zeigen, nämlich in der vermuteten Aufprallrichtung X.

Bei der Fig. 4B schaut man also auf die Fläche des vorderen Wandelements 50v der Hülle 50 der Hohlkörperformen 40 der hier in Mehrzahl vorliegenden Stabilisierungs-/Stauchelemente 30. Schematisch angedeutet erkennt man auch die hintere Wand 50h der Hüllen 50.

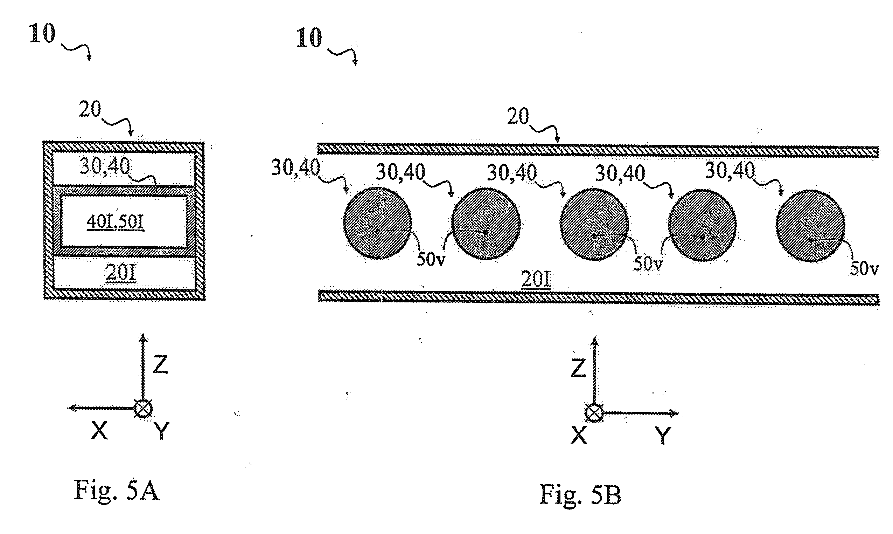

Analoges gilt für die Anordnung der Fig. 5A und 5B mit einer Zylinderform der Hohlkörper 40 der in Mehrzahl vorliegenden Stabilisierungs-/Stauchelemente 30.

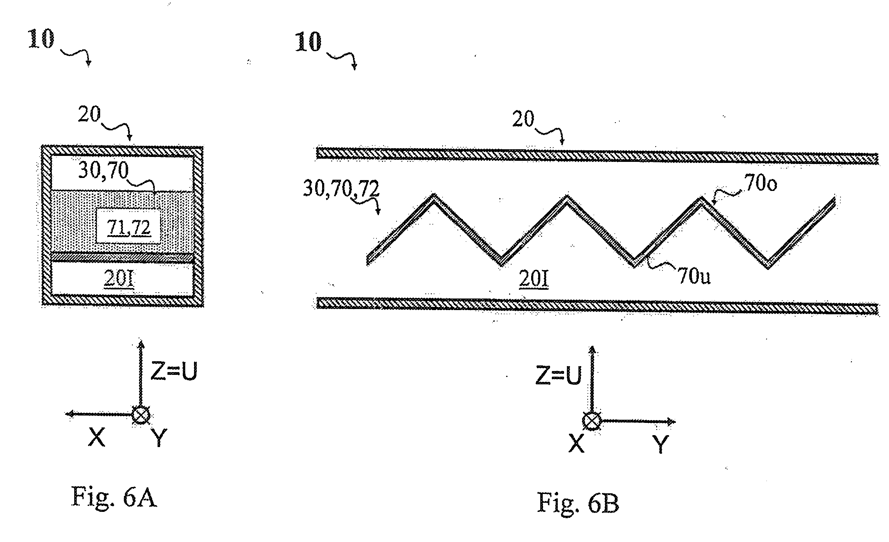

Die Fig. 6A und 6B zeigen eine Ausführungsform mit einer mehrfach undulierten Zwischenwand 70, welche hier ein einzeln vorgesehenes Stabilisierungs-/Stauchelement 30 bildet, wobei die Anordnung wieder in der vermuteten Aufprallrichtung X betrachtet wird, so dass man in der Zeichnung auf die vordere Kante 70v oder auf den vorderen Kantenbereich 70v blickt.

Die Fig. 7A bis 7D zeigen schematisch geschnittene Seitenansichten verschiedener Ausführungsform des erfindungsgemäßen Aufprallschutzelements 10 mit einem oder mehreren konisch verlaufenden Stabilisierungs-/Stauchelementen 30 mit Hohlkörperform 40.

Die hier gezeigten Ausführungsformen der Fig. 7A bis 7D unterscheiden sich ausschließlich hinsichtlich ihres Füllstatus der jeweiligen Hohlräume oder Innenbereiche 201 des dem Aufprallschutzelement 10 zugrunde liegenden Hohlkörperelements 20 und 40I, 50I der Hohlkörperform 40 und der Hülle 50 des jeweiligen Stabilisierungs-/Stauchelements 30.

In der Ausführungsform der Fig. 7A sind sämtliche Hohlräume leer, also ungefüllt.

In den Ausführungsformen der Fig. 7B und 7D sind dagegen die Innenbereiche 40l, 50l der Stabilisierungs-/Stauchelemente 30 mit einem Kernmaterial 60k als Kernbereich 60 oder Kernelement 60 gefüllt. Bei der Herstellung können üblicherweise dieser Kernbereich 60 oder das Kernelement 60 aus dem Kernmaterial 60k vorgelegt sein oder werden, um dann mit der entsprechenden Hülle 50 für die Hohlkörperform 40 umgeben zu werden.

Bei der Ausführungsform der Fig. 7B ist das Stabilisierungs-/Stauchelemente 30 gefüllt, das Innere 201 des zugrunde liegenden Hohlkörperelements 20 jedoch ungefüllt, also leer.

Bei den Ausführungsformen der Fig. 7C und 7D ist im Gegensatz dazu auch das Innere 20I des zugrunde liegenden Hohlkörperelements 20 mit einem Kernmaterial 20k gefüllt.

Bei der Fig. 7D liegt darüber hinaus eine Füllung des Inneren 40I, 50I der Hohlkörperform 40 und der Hülle 50 des Stabilisierungs-/Stauchelemente 30 mit dem den Kernbereich 60 bildenden Kernmaterial 60k vor, wogegen bei der Fig. 7C das Stabilisierungs-/Stauchelement 30 ungefüllt ist.

Die Fig. 8A und 8D zeigen ebenfalls in schematischer und geschnittener Seitenansicht Ausführungsformen des Aufprallschutzelements 10 mit Stabilisierungs-/Stauchelementen 30 in Hohlkörperform 40, hier jedoch, im Gegensatz zu den Ausführungsformen der Fig. 7A bis 7D, mit in der vermuteten Aufprallrichtung X konstantem Querschnitt, z.B. in Zylinderform. Ansonsten sind die Strukturen zu denen der Fig. 7A bis 7D analog zu bewerten.

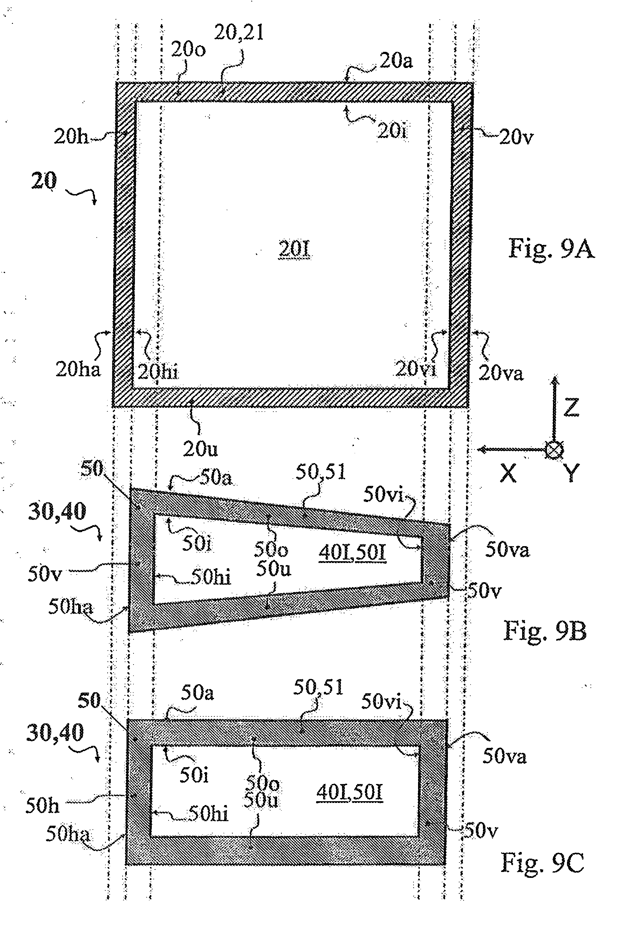

Die Fig. 9A bis 9C zeigen nach Art einer Explosionsdarstellung eine Ausführungsform des Aufprallschutzelements 10 in schematischer und geschnittener Seitenansicht, wobei die Fig. 9A im Wesentlichen das dem erfindungsgemäßen Aufprallschutzelement 10 zugrunde liegende Hohlkörperelement 20, die Fig. 9B und 9C dagegen jeweils ein konisches bzw. ein zylindrisches Stabilisierungs-/Stauchelement 30 in Hohlkörperform illustrieren.

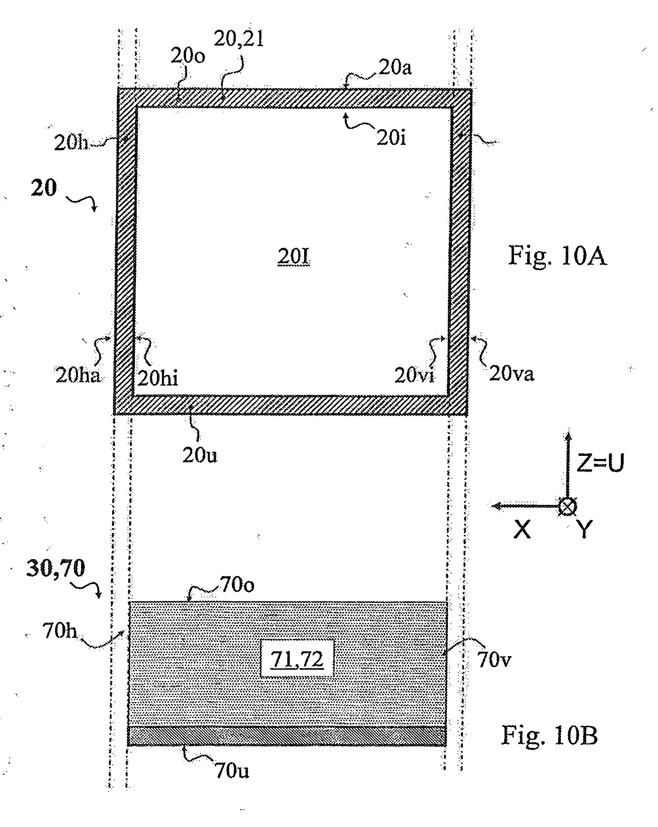

Analog dazu zeigen die Fig. 10A und 10B in schematischer und geschnittener Seitenansicht ebenfalls nach Art einer Explosionsdarstellung eine Ausführungsform des Aufprallschutzelements 10, wobei die Fig. 10A wiederum das dem erfindungsgemäßen Aufprallschutzelement 10 zugrunde liegende Hohlkörperelement 20 und die Fig. 10B ein entsprechendes Stabilisierungs-/Stauchelement 30 nach Art einer mehrfach undulierten Zwischenwand 70 darstellt.

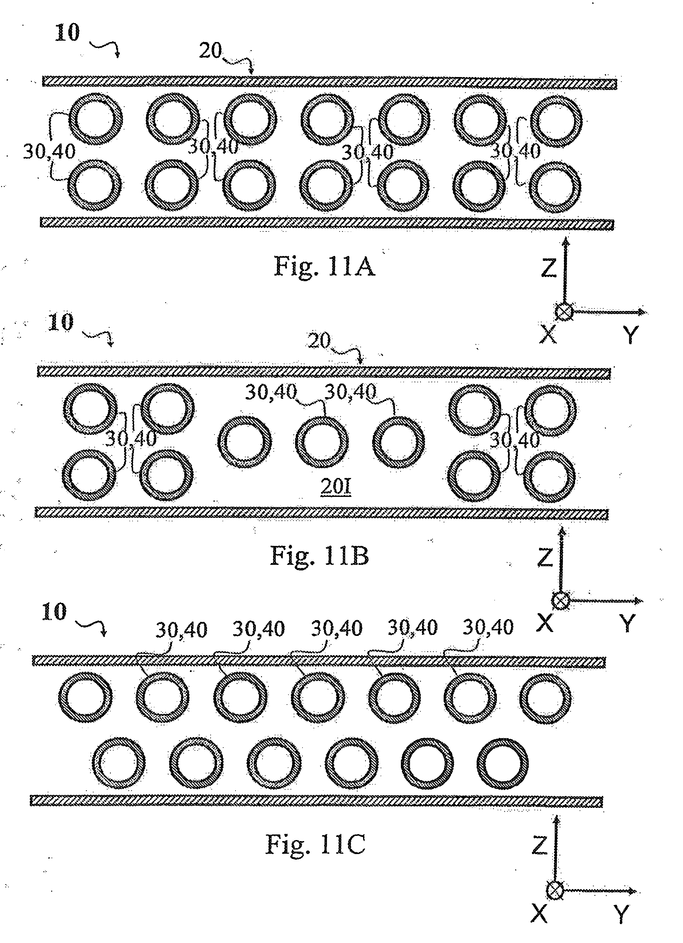

Die Fig. 11A bis 11C zeigen in schematischer und geschnittener Draufsicht verschiedene Ausführungsformen des Aufprallschutzelements 10, wobei mehrere Reihen von Stabilisierungs-/Stauchelementen 30 in Hohlkörperform 40 vorgesehen sind.

Bei der Fig. 11A sind identische Hohlkörperformen 40 für die Stabilisierungs-/Stauchelemente 30 vorgesehen und erstrecken sich in der Y-Richtung und in der Z-Richtung parallel zueinander.

Bei der Anordnung der Fig. 11C liegen ebenfalls zwei parallel zueinander in Y-Richtung verlaufende Reihen von Mehrzahlen von Stabilisierungs-/Stauchelementen 30 vor, diese sind jedoch zueinander versetzt, quasi auf Lücke angeordnet.

Bei der Anordnung der Fig. 11B schließlich liegt eine Unterteilung der Mehrzahl vorgesehener Stabilisierungs-/Stauchelemente 30 vor. Im mittleren Bereich ist eine einzelne Reihe mit einer Mehrzahl Stabilisierungs-/Stauchelementen 30 vorgesehen. In den äußeren Bereichen liegen die Stabilisierungs-/Stauchelemente 30 wieder in zwei parallelen Reihen vor.

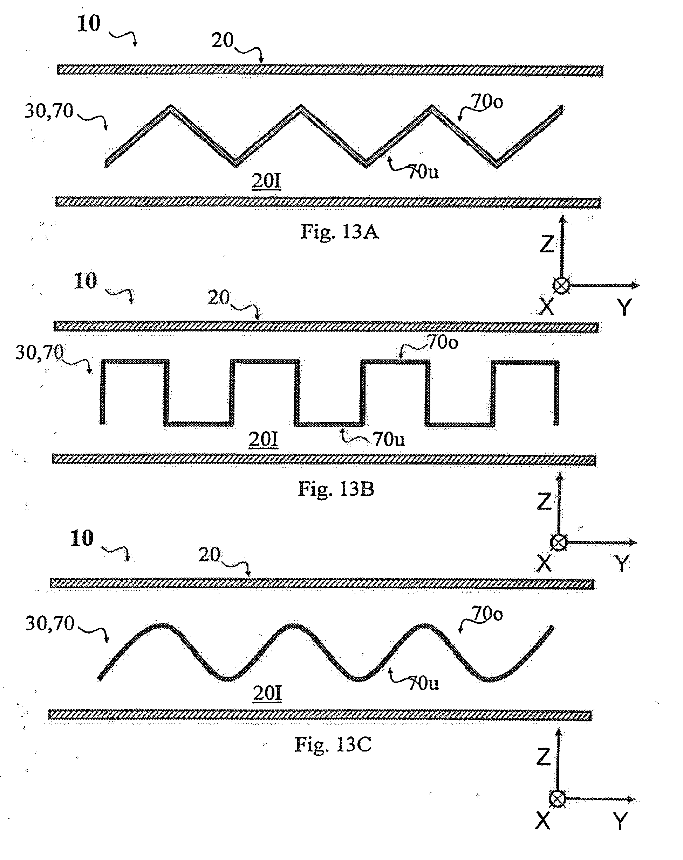

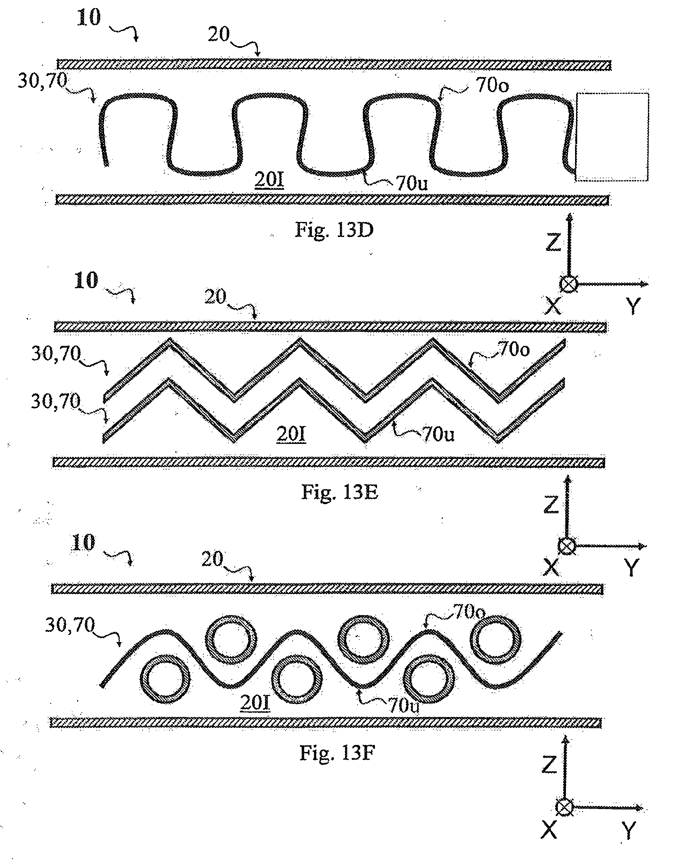

Die Fig. 13A bis 13E zeigen verschiedene Ausführungsformen des Aufprallschutzelements 10 unter Verwendung mindestens eines Stabilisierungs-/Stauchelements 30 in Form eines mehrfach undulierten Zwischenwandelements 70. Dabei sind die Ausführungsformen der Fig. 13A bis 13D mit jeweils einem einzelnen Stabilisierungs-/Stauchelement 30 nach Art eines mehrfach undulierten Wandelements 70 ausgebildet, nämlich in ihrer Querschnittsform mit einem sägezahnförmigen Verlauf, einem stufenartigen Verlauf, einem wellenförmigen, vorzugsweise sinusförmigen Verlauf bzw. einem Verlauf mit Ovalen, auf der Grundlage des stufenförmigen Verlaufs auf Fig. 13B.

Bei der Ausführungsform der Fig. 13E sind zwei Stabilisierungs-/Stauchelemente 30 jeweils mit einer sägezahnförmig verlaufenden mehrfach undulierten Zwischenwand 70 gezeigt. Es können jedoch auch andere Verläufe mehrfach vorgesehen sein, auch müssen die undulierten Zwischenwandelemente 70 nicht von gleicher Gestalt sein.

Darüber hinaus können sich die unterschiedlichen Strukturmerkmale in der Verlaufsrichtung Y auch abwechseln, d.h., dass jeweils ein mehrfach unduliertes Zwischenwandelement 70 abschnittsweise mit unterschiedlicher Undulation ausgebildet sein kann.

Bei der erfindungsgemäßen Ausführungsform der Fig. 13F werden ein mehrfach unduliertes Zwischenwandelement 70 und eine Mehrzahl Stabilisierungs-/Stauchelemente 30 mit Hohlkörperform 40 miteinander kombiniert. Auch hier sind beliebige Kombinationen denkbar.

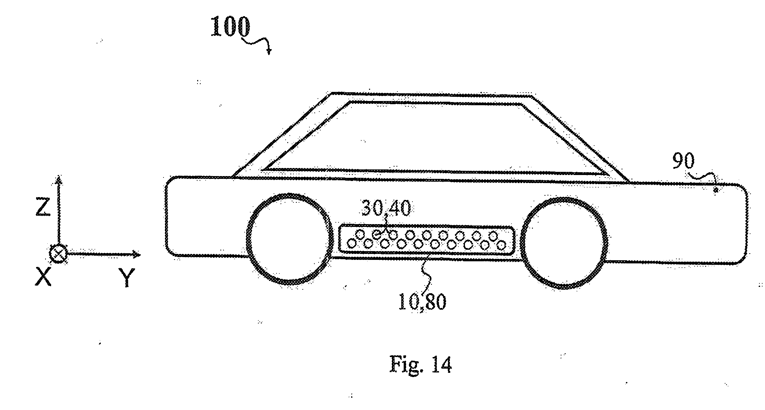

Die Fig. 14 zeigt schließlich die Verwendung einer Ausführungsform des Aufprallschutzelements 10 im Bereich eines Fahrzeugs 100, nämlich eines PKWs, in dessen Karosserie 90 als oder als Teil des so genannten Schwellers 80.

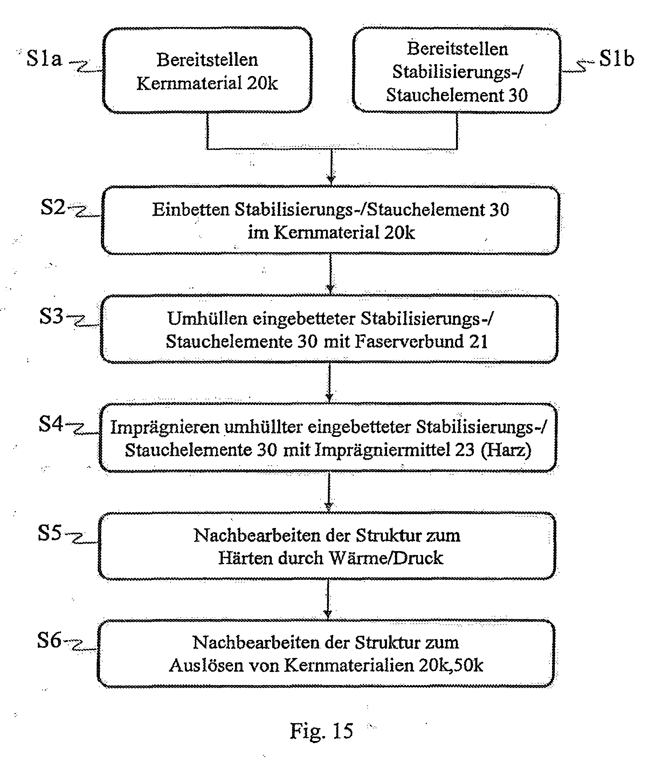

Die Fig. 15 illustriert eine Ausführungsform des erfindungsgemäßen Verfahrens zum Herstellen eines erfindungsgemäßen Aufprallschutzelements 10.

In den Schritten S1a und S1b werden das Kernmaterial 20k für das dem erfindungsgemäßen Aufprallschutzelement 10 zugrunde liegende Hohlkörperelement 20 und die Stabilisierungs-/Stauchelemente 30 bereitgestellt.

Im Schritt S2 werden die ein oder mehreren Stabilisierungs-/Stauchelemente 30 im Kernmaterial 20k eingebettet. Dies kann geschehen entweder durch Ausbilden entsprechender Ausnehmungen in dem bereit gestellten Kernmaterial 20k und durch Einlegen oder Einbringen der einen oder mehreren Stabilisierungs-/Stauchelemente 30 in die Ausnehmungen oder aber durch Vorlegen der ein oder mehreren Stabilisierungs-/Stauchelemente 30 und durch entsprechendes Umhüllen mit dem bereitgestellten Kernmaterial 20k.

Im Schritt S3 wird die so erhaltene eingebettete oder Einbettungsstruktur mit den eingebetteten Stabilisierungs-/Stauchelementen 30 mit einem CFK-Material 21 für das dem erfindungsgemäßen Aufprallschutzelement 10 zugrunde liegende Hohlkörperelement 20 umhüllt.

Im Schritt S4 wird die so erhaltene Struktur mit den umhüllten eingebetteten Stabilisierungs-/Stauchelementen 30 mit einem Imprägniermittel 23 imprägniert. Dabei kann es sich um ein Harz oder Phenolharz oder dergleichen handeln.

In den Schritten S5 und S6 kann eine Nachbearbeitung der so erhaltenen imprägnierten Struktur stattfinden.

Diese kann einerseits im Schritt S5 in einem Aushärtungsprozess unter Anwendung von Wärme und/oder Druck bestehen, wobei also der Verbundwerkstoff aus Fasermaterial und Harzmatrix fertig gestellt wird und/oder die Stabilisierungs-/Stauchelemente 30 an der Innenseite 20i, 25i des dem erfindungsgemäßen Aufprallschutzelement 10 zugrunde liegenden Hohlkörperelements 20 als Hülle 25 angebracht werden.

Andererseits ist es zusätzlich oder alternativ denkbar, durch im Schritt S6 in einem Temperaturschritt das oder die Kernmaterialien 20k auszulösen, um tatsächlich hohlkörperartige Strukturen im Inneren des dem Aufprallschutzelement 10 zugrunde liegenden Hohlkörperelements 20 und/oder im Inneren 30I, 40I der gegebenenfalls vorgesehenen hohlkörperartigen Stabilisierungs-/Stauchelemente 30 auszubilden.

Die Schritte S4 des Imprägnierens und S5 des Aushärtens und/oder Vernidens müssen nicht getrennt ausführbar sein, wie z.B. bei einem VAP-Verfahren oder dergleichen, bei welchen das Härten in S5 als nachfolgender Schritt definiert ist. Bei anderen Verfahren - z.B. RTM-Verfahren - erfolgt das Härten und/oder das Verbinden des Schritts S5 schon simultan mit dem Prozess des Imprägnierens oder Infusionierens des Schritts S4, wenn nämlich das verwendete Werkzeug unter Druck und Temperatur steht.

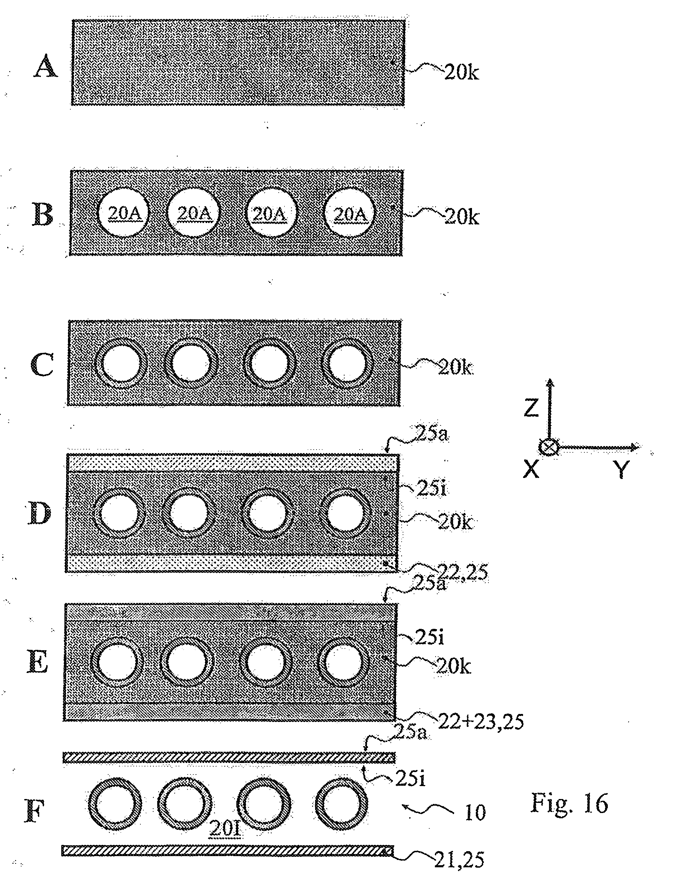

Die Fig. 16A bis 16E zeigen in schematischer und geschnittener Draufsicht verschiedene Zwischenstufen beim Herstellen eines erfindungsgemäßen Aufprallschutzelements 10.

Bei dem in Fig. 16A gezeigten Zwischenzustand wird ein Kernmaterial 20k für das dem erfindungsgemäßen Aufprallschutzelement 10 zugrunde liegende Hohlkörperelement 20 vorgelegt.

Im Übergang zu dem in Fig. 16B gezeigten Zwischenzustand werden dann Ausnehmungen 20A in das vorgelegte Kernmaterial 20k eingebracht, die formmäßig den einzubringenden Stabilisierungs-/Stauchelementen 30 entsprechen und zu deren Aufnahme dienen.

Im Übergang zu dem in Fig. 16C gezeigten Zwischenzustand werden dann in die geschaffenen Ausnehmungen 20A die Stabilisierungs-/Stauchelemente 30 eingelegt oder eingebracht.

Im Übergang zu dem in Fig. 16D gezeigten Zwischenzustand wird dann die erhaltene Struktur mit einer Vorform 22 des CFK-Materials 21 für das Hohlkörperelement 20 des erfindungsgemäßen Aufprallschutzelements 10 umgeben, z.B. durch Umwickeln oder dergleichen.

Im Übergang zu dem in Fig. 16E gezeigten Zwischenzustand erfolgen dann das Imprägnieren mit einem Imprägniermittel 23 und im Übergang zu dem in Fig. 16F gezeigten Zwischenzustand eine entsprechende Nachbehandlung zum Einbetten der Vorform 22 des CFK-Materials 21 in die Matrix des Imprägniermittels 23 und damit zum Fertigstellen des CFK-Materials 21 und der Hülle 25 und zum Auslösen des Kernbereichs, d.h. des Kernmaterials 20k aus dem Inneren 20I des dem erfindungsgemäßen Aufprallschutzelement 10 zugrunde liegenden Hohlkörperelements 20.

Das Verbinden der Stabilisierung-/Stauchelemente 30 an der Innenseite 25i der Hülle 25 kann simultan mit dem Imprägnieren erfolgen, z.B. wenn das Imprägnieren unter Druck und/oder Temperatur z.B. in einem Formwerkzeug erfolgt; es sind aber auch getrennte Arbeitsgänge denkbar und möglich, bei welchen die Struktur erst imprägniert und dann weiterbehandelt wird, um die Stabilisierungs-/Stauchelemente an der Innenseite 25i der Hülle 25 anzubringen.

### Bezugszeichen:

- 10: erfindungsgemäßes Aufprallschutzelement, erfindungsgemäßer Crashabsorber
- 20: zugrunde liegender Hohlkörper, zugrunde liegendes Hohlkörperelement des erfindungsgemäßen Aufprallschutzelements 10
- 20a: Außenseite, Außenfläche
- 20A: Ausnehmung im Kernmaterial 20k
- 20i: Innenseite, Innenfläche
- 20I: Inneres, Innenraum des zugrunde liegenden Hohlkörperelements 20 des erfindungsgemäßen Aufprallschutzelements 10
- 20k: Kernmaterial
- 20h: hintere Wand, hinteres Wandelement
- 20ha: Außenseite hinteres Wandelement 20h
- 20hi: Innenseite hinteres Wandelement 20h
- 20o: obere Wand, oberes Wandelement
- 20u: untere Wand, unteres Wandelement
- 20v: vordere Wand, vorderes Wandelement
- 20va: Außenseite vorderes Wandelement 20v
- 20vi: Innenseite vorderes Wandelement 20v
- 21: Faserverbund, Faserverbundmaterial, CFK-Material
- 22: Vorform des Faserverbundmaterials oder CFK-Materials
- 23: Imprägniermittel, Harz, Phenolharz
- 25: Hülle
- 25a: Außenseite der Hülle 25
- 25i: Innenseite der Hülle 25
- 30: Stabilisierungs-/Stauchelement
- 30I: Innenbereich des Stabilisierungs-/Stauchelements 30
- 40: Hohlkörper, Hohlkörperform des Stabilisierungs-/Stauchelements 30
- 40I: Innenbereich des Hohlkörpers, der Hohlkörperform 40
- 50: Hülle des Hohlkörpers 40/des Stabilisierungs-/Stauchelements 30
- 50a: Außenseite, Außenfläche
- 50i: Innenseite, Innenfläche
- 50h: hintere Wand, hinteres Wandelement
- 50ha: Außenseite hinteres Wandelement 50h
- 50hi: Innenseite hinteres Wandelement 50h
- 50o: obere Wand, oberes Wandelement
- 50u: untere Wand, unteres Wandelement
- 50v: vordere Wand, vorderes Wandelement
- 50va: Außenseite vorderes Wandelement 50v
- 50vi: Innenseite vorderes Wandelement 50i
- 51: Faserverbund, Faserverbundmaterial, CFK-Material
- 60: Kernbereich, Kernelement
- 60k: Füllmaterial, Kernmaterial des Kernbereichs 60 oder Kernelements 60
- 70: Zwischenwandelement, Zwischenwand, mehrfach unduliertes Zwischenwandelement, mehrfach undulierte Zwischenwand
- 70h: hinterer Kanten-/Stirnbereich, hintere Kanten-/Stirnfläche des Zwischenwandelements 70
- 70v: vorderer Kanten-/Stirnbereich, vordere Kanten-/Stirnfläche des Zwischenwandelements 70
- 71: Faserverbund, Faserverbundmaterial, CFK-Material
- 72: mehrfach undulierter Abschnitt
- 80: Schweller
- 90: Karosserie
- 100: Fahrzeug, Automobil, PKW

- I: Inneres, Innenbereich des Hohlkörperelementes 20
- U: Undulationsrichtung
- X: vermutete Aufprallrichtung
- Y: Erstreckungsrichtung des Hohlkörperelements 20 des Aufprallschutzelements 10
- Z: vertikale Erstreckungsrichtung

## Patentansprüche

1. Aufprallschutzelement (10) für eine Fahrzeugkarosserie zur Aufnahme und/oder Dissipation kinetischer Energie bei einem Aufprall,
- welches ein Hohlkörperelement (20) mit oder aus einem Faserverbund aufweist,
- wobei das Hohlkörperelement (20) ein einer vermuteten Aufprallrichtung (X) zugewandtes vorderes Wandelement (20v) und ein der vermuteten Aufprallrichtung (X) abgewandetes hinteres Wandelement (20h) aufweist,
- wobei das Hohlkörperelement (20) in seinem Inneren (20l) ein oder mehrere Stabilisierungs-/Stauchelemente (30) aufweist,
- wobei die ein oder mehreren Stabilisierungs-/Stauchelemente (30) an den Innenseiten (20vi, 20hi) der der vermuteten Aufprallrichtung (X) zugewandten und abgewandten vorderen bzw. hinteren Wandelemente (20v, 20h) angebracht sind und
a) wobei ein oder mehrere Stabilisierungs-/Stauchelemente (30) in Form eines Hohlkörpers (40) ausgebildet sind und
b) wobei ein oder mehrere Stabilisierungs-/Stauchelemente (30) in Form eines mehrfach undulierten Zwischenwandelements (70) ausgebildet sind.

2. Aufprallschutzelement (10) nach Anspruch 1, wobei der Hohlkörper (40) eines Stabilisierungs-/Stauchelements (30) mit konstantem Durchmesser oder Querschnitt ausgebildet ist, insbesondere von einer der vermuteten Aufprallrichtung (X) abgewandten Seite (50h, 50ha) zu einer der vermuteten Aufprallrichtung (X) zugewandten Seite (50v, 50va) verlaufend hin.

3. Aufprallschutzelement (10) nach einem der vorangehenden Ansprüche, wobei der Hohlkörper (40) eines Stabilisierungs-/Stauchelements (30) die Form eines Zylinders - insbesondere mit kreisförmiger und/oder elliptischer End- oder Grundfläche - Quaders und/oder Prismas - insbesondere mit Endflächen in Form eines regelmäßigen oder unregelmäßigen n-Ecks aufweist, insbesondere jeweils in senkrechter oder schiefer Form.

4. Aufprallschutzelement (10) nach einem der vorangehenden Ansprüche, wobei der Hohlkörper (40) eines Stabilisierungs-/Stauchelements (30) konisch oder verjüngend ausgebildet ist, insbesondere von einer der vermuteten Aufprallrichtung (X) abgewandten Seite (50h, 50ha) zu einer der vermuteten Aufprallrichtung (X) zugewandten Seite (50v, 50va) verlaufend hin.

5. Aufprallschutzelement (10) nach einem der vorangehenden Ansprüche 1 oder 3, wobei der Hohlkörper (40) eines Stabilisierungs-/Stauchelements (30) die Form eines Stumpfs eines geometrischen Körpers aufweist, vorzugsweise eines Kegelstumpfs - insbesondere mit kreisförmigen und/oder elliptischen End-oder Grundflächen - oder eines Pyramidenstumpfs - insbesondere mit Endflächen in Form eines regelmäßigen oder unregelmäßigen n-Ecks, insbesondere von einer der vermuteten Aufprallrichtung (X) abgewandten Seite (50h, 50ha) zu einer der vermuteten Aufprallrichtung (X) zugewandten Seite (50v, 50va) verlaufend hin.

6. Aufprallschutzelement (10) nach einem der vorangehenden Ansprüche, wobei der Hohlkörper (40) eines Stabilisierungs-/Stauchelements (30) mit oder aus mindestens einem Faserverbund ausgebildet ist.

7. Aufprallschutzelement (10) nach einem der vorangehenden Ansprüche, wobei der Hohlkörper (40) eines Stabilisierungs-/Stauchelements (30) in seinem Inneren (401) mit einem Material (60) gefüllt ist, insbesondere mit einem geschäumten Material, vorzugsweise mit einem Polymermaterial, einem Metallmaterial, einem PU- oder Polyurethanmaterial.

8. Aufprallschutzelement (10) nach einem der vorangehenden Ansprüche, wobei eine Anordnung einer Mehrzahl von Stabilisierungs-/Stauchelementen (30) in Form von Hohlkörpern (40) vorgesehen ist, insbesondere in Form ein oder mehrerer Reihen, die sich senkrecht zur vermuteten Aufprallrichtung (X) und/oder in einer Längserstreckungsrichtung (Y) des Hohlkörperelements (20) des Aufprallschutzelements (10) erstrecken.

9. Aufprallschutzelement (10) nach einem der vorangehenden Ansprüche, wobei ein jeweiliger Hohlkörper (40) eines Stabilisierungs-/Stauchelements (30) in Hohlkörperform mit den Außenseiten (50va, 50ha) vorderer bzw. hinterer Wandelemente (50v, 50h) als Endflächen an den Innenseiten (20vi, 20hi) der der vermuteten Aufprallrichtung (X) zu- bzw. abgewandten vorderen und hinteren Wandelemente (20v, 20h) des Hohlkörperelements (20) des Aufprallschutzelements (10) angebracht ist.

10. Aufprallschutzelement (10) nach einem der vorangehenden Ansprüche, wobei eine Undulationsrichtung (U) der Undulation eines Stabilisierungs-/Stauchelements (30) in Form eines mehrfach undulierten Zwischenwandelements (70) zur vermuteten Aufprallrichtung (X) und/oder zu einer Längserstreckungsrichtung (Y) des Hohlkörperelements (20) des Aufprallschutzelements (10) senkrecht verläuft.

11. Aufprallschutzelement (10) nach einem der vorangehenden Ansprüche, wobei ein mehrfach unduliertes Zwischenwandelement (70) eines Stabilisierungs-/Stauchelements (30) eine Vorderkante (70v) und eine Hinterkante (70h) aufweist, welche an den Innenseiten (20vi, 20hi) der der vermuteten Aufprallrichtung (X) zu- bzw. abgewandten vorderen bzw. hinteren Wandelemente (20v, 20h) des Hohlkörperelements (20) des Aufprallschutzelements (10) angebracht sind.

12. Aufprallschutzelement (10) nach einem der vorangehenden Ansprüche, wobei ein mehrfach unduliertes Zwischenwandelement (70) eines Stabilisierungs-/Stauchelements (30) einen mehrfach undulierten Abschnitt (72) aufweist, insbesondere im Querschnitt mit einem Verlauf in Form eines einfachen oder mehrfachen Sägezahns, mit schrägen und/oder senkrechten Flanken, in Form einer einfachen oder mehrfachen Stufe, in Form eines einfachen oder mehrfachen Ovals oder einer einfachen oder mehrfachen abgerundeten Stufe, einer einfachen oder mehrfachen Wellenform, einer einfachen oder mehrfachen Sinusform oder Kombinationen daraus.

13. Aufprallschutzelement (10) nach einem der vorangehenden Ansprüche, wobei ein mehrfach unduliertes Zwischenwandelement (70) eines Stabilisierungs-/Stauchelements (30) mit oder aus mindestens einem Faserverbund (71) ausgebildet ist.

14. Aufprallschutzelement (10) nach einem der vorangehenden Ansprüche, welches in seinem Inneren (201) mit einem Kernmaterial (20k) teilweise oder vollständig gefüllt ist, wobei das Kernmaterial (20k) insbesondere ein oder mehrere Stabilisierungs-/Stauchelemente (30) einbettet.

15. Aufprallschutzelement (10) nach einem der vorangehenden Ansprüche, bei welchem ein jeweiliger Faserverbund (21, 51, 71) aufweist oder gebildet wird von ein oder mehreren Materialien aus der Gruppe, die aufweist CFK-Materialien, Glasmaterialien, Aramidmaterialien, Naturfasermaterialien, Basaltmaterialien und deren Kombinationen.

16. Verfahren zum Herstellen eines Aufprallschutzelements (10) nach einem der Ansprüche 1 bis 15, mit den Schritten:
(A) Bereitstellen eines Kernmaterials (20k),
(B) Bereitstellen eines oder mehrerer Stabilisierungs-/Stauchelemente (30),
(C) Einbetten der Stabilisierungs-/Stauchelemente (30) im Kernmaterial (20k),
(D) teilweises oder vollständiges Umgeben der im Schritt (C) erhaltenen Struktur aus in einem Kernmaterial (20k) eingebetteter Stabilisierungs-/Stauchelemente (30) mit einem Faserverbund (21) oder einer Vorform (22) eines Faserverbunds (21) als Hülle (25),
(E) Imprägnieren der im Schritt (D) erhaltenen Struktur aus teilweise oder vollständig mit einem Faserverbund (21) oder einer Vorform (22) eines Faserverbunds (21) als Hülle (25) umgebener in einem Kernmaterial (20k) eingebetteter Stabilisierungs-/Stauchelemente (30) mit einem Imprägniermittel (23) und
(F) Verbinden der Stabilisierungs-/Stauchelemente (30) mit der Innenseite (25i) der Hülle (25).

17. Verfahren nach Anspruch 16, wobei das Einbetten (C) der Stabilisierungs-/Stauchelemente (30) im Kernmaterial (20k) erfolgt, indem im bereitgestellten Kernmaterial (20k) ein oder mehrere zu den Stabilisierungs-/Stauchelementen (30) passende Hohlräume geschaffen und dann die Stabilisierungs-/Stauchelemente (30) in die Hohlräume eingelegt oder eingebracht werden.

18. Verfahren nach Anspruch 16, wobei das Einbetten (C) der Stabilisierungs-/Stauchelemente (30) im Kernmaterial (20k) erfolgt, indem das eine oder die mehreren Stabilisierungs-/Stauchelemente (30) vorgelegt und dann mit dem bereitgestellten Kernmaterial (20K) umgeben werden.

19. Verfahren nach einem der vorangehenden Ansprüche 16 bis 18, wobei das teilweise oder vollständige Umgeben (D) mit einem Faserverbund (21) oder einer Vorform (22) eines Faserverbunds (21) erfolgt, indem die Einbettungsstruktur aus Kernmaterial (20k) und einem oder mehreren Stabilisierungs-/Stauchelementen (30) mit dem Faserverbund (21) oder der Vorform (22) des Faserverbunds (21) davon umhüllt, umflochten, umwickelt und/oder belegt wird.

20. Verfahren nach einem der vorangehenden Ansprüche 16 bis 19, wobei das Imprägnieren (E) der umhüllten Struktur erfolgt, indem das Imprägniermittel (23), insbesondere mit ein polymerer Matrixwerkstoff, vorzugsweise ein Harz oder ein Phenolharz, auf- oder eingebracht wird, insbesondere im Rahmen eines Infusionsverfahrens und/oder eines RTM-Verfahrens, z.B. einer Vakuuminfusion und/oder im Zusammenhang mit einem entsprechenden Imprägnierwerkzeug oder einer Imprägnierform, vorzugsweise in geschlossener Gestalt.

21. Verfahren nach einem der vorangehenden Ansprüche 16 bis 20, wobei bei der Nachbearbeitung (F) die imprägnierte und umhüllte Struktur ausgehärtet wird, insbesondere unter Anwendung von Temperatur und/oder Druck, vorzugsweise gleichzeitig mit dem Imprägnieren (E).

22. Verfahren nach einem der vorangehenden Ansprüche 16 bis 21, wobei bei der Nachbearbeitung (F) das in der imprägnierten umhüllten Struktur enthaltene Kernmaterial (20k) ausgelöst wird, insbesondere durch Anwenden eines Temperaturschritts durch Schmelzen oder durch chemische Insultien, so dass zumindest ein Teil des Inneren (201) des Hohlelements (20) des Aufprallschutzelements (10) mit einem oder mehreren Hohlräumen verbleibt.

23. Verwendung eines Aufprallschutzelements (10) nach einem der Ansprüche 1 bis 15 in einem Fahrzeug, vorzugsweise als Teil oder in einem Teil der Fahrzeugkarosserie, vorzugsweise als Schweller in einem Kraftfahrzeug.

## Claims

1. An impact protection element (10) for a vehicle body for the withstanding and/or dissipation of kinetic energy in the event of an impact,
- which exhibits a hollow body element (20) having or made from a fibre composite, with
- the hollow body element (20) exhibiting a front wall element (20v) facing towards a notional impact direction (X) and a rear wall element (20h) facing away from a notional impact direction (X),
- the hollow body element (20) exhibiting one or a plurality of stabilising/compression elements (30) in its interior (201)
- the one or a plurality of stabilising/compression elements (30) being attached on the insides (20vi, 20hi) of the front and rear wall elements (20v, 20h) facing respectively towards and away from the notional impact direction (X), and
a) one or a plurality of stabilising/compression elements (30) being configured in the form of a hollow body (40) and
b) one or a plurality of stabilising/compression elements (30) being configured in the form of a multiply undulated partition element (70).

2. The impact protection element (10) of claim 1 wherein the hollow body (40) of a stabilising/compression element (30) is configured with a constant diameter or cross-section, in particular running from a side (50h, 50ha) facing away from the notional impact direction (X) to a side (50v, 50va) facing towards the notional impact direction (X).

3. The impact protection element (10) of any of the preceding claims wherein the hollow body (40) of a stabilising/compression element (30) exhibits the form of a cylinder - in particular having a circular and/or elliptical end face or base face - cuboid and/or prism - in particular with end faces in the form of a regular or irregular polygon with n edges, in particular each in vertical or oblique form.

4. The impact protection element (10) of any of the preceding claims wherein the hollow body (40) of a stabilising/compression element (30) is configured conically or taperingly, in particular running from a side (50h, 50ha) facing away from the notional impact direction (X) to a side (50v, 50va) facing towards the notional impact direction (X).

5. The impact protection element (10) of any of the preceding claims 1 or 3 wherein the hollow body (40) of a stabilising/compression element (30) exhibits the form of a frustum of a geometrical body, preferably of a frustum of a cone - in particular having circular and/or elliptical end faces or base faces - or of a frustum of a pyramid - in particular having end faces in the form of a regular or irregular polygon with n edges, in particular running from a side (50h, 50ha) facing away from the notional impact direction (X) to a side (50v, 50va) facing towards the notional impact direction (X).

6. The impact protection element (10) of any of the preceding claims wherein the hollow body (40) of a stabilising/compression element (30) is configured with or from at least one fibre composite.

7. The impact protection element (10) of any of the preceding claims wherein the hollow body (40) of a stabilising/compression element (30) is filled in its interior (40l) with a material (60), in particular with a foamed material, preferably with a polymer material, a metal material, a PU or polyurethane material.

8. The impact protection element (10) of any of the preceding claims wherein an arrangement of a plurality of stabilising/compression elements (30) is provided in the form of hollow bodies (40), in particular in the form or one or a plurality of rows extending at right angles to the notional impact direction (X) and/or in a longitudinal extension direction (Y) of the hollow body element (20) of the impact protection element (10).

9. The impact protection element (10) of any of the preceding claims wherein a respective hollow body (40) of a stabilising/compression element (30) in hollow body form is attached by the outer sides (50va, 50ha) of front and/or rear wall elements (50v, 50h) as end faces to the inner sides (20vi, 20hi) of those front and rear wall elements (20v, 20h) of the hollow body element (20) of the impact protection element (10) facing respectively towards or away from the notional impact direction (X).

10. The impact protection element (10) of any of the preceding claims wherein an undulation direction (U) of the undulation of a stabilising/compression element (30) in the form of a multiply undulated partition element (70) runs at right angles to the notional impact direction (X) and/or to a longitudinal extension direction (Y) of the hollow body element (20) of the impact protection element (10).

11. The impact protection element (10) of any of the preceding claims wherein a multiply undulated partition element (70) of a stabilising/compression element (30) exhibits a forward edge (70v) and a rear edge (70h) which are attached to the inner sides (20vi, 20hi) of those front and rear wall elements (20v, 20h) of the hollow body element (20) of the impact protection element (10) facing respectively towards or away from the notional impact direction (X).

12. The impact protection element (10) of any of the preceding claims wherein a multiply undulated partition element (70) of a stabilising/compression element (30) exhibits a multiply undulated section (72), in particular in cross-section having a profile in the form of a single or multiple sawtooth having angled and/or vertical flanks, in the form of a single or multiple step, in the form of a single or multiple oval or of a single or multiple rounded step, of a single or multiple waveform, of a single or multiple sine form or combinations thereof.

13. The impact protection element (10) of any of the preceding claims wherein a multiply undulated partition element (70) of a stabilising/compression element (30) is configured with or out of at least one fibre composite (71).

14. The impact protection element (10) of any of the preceding claims which is partly or entirely filled in its interior (201) with a core material (20k), the core material (20k) in particular embedding one or a plurality of stabilising/compression elements (30).

15. The impact protection element (10) of any of the preceding claims wherein a respective fibre composite (21, 51, 71) exhibits or is formed by one or a plurality of materials out of the group which exhibits CFK materials, glass materials, aramide materials, natural fibre materials, basalt materials and their combinations.

16. A method for producing an impact protection element (10) according to any one of claims 1 to 15, with the steps:
(A) Provision of a core material (20k),
(B) Provision of one or a plurality of stabilising/compression elements (30),
(C) Embedding the stabilising/compression elements (30) in the core material (20k),
(D) Partial or complete surrounding of the structure obtained in step (C) comprising stabilising/compression elements (30) embedded in a core material (20k) with a fibre composite (21) or a preform (22) of a fibre composite (21) as an envelope (25),
(E) Impregnating of the structure obtained in step (D), comprising stabilising/compression elements (30) embedded in a core material (20k) partially or completely surrounded with a fibre composite (21) or with a preform (22) of a fibre composite (21) as an envelope (25), with an impregnating medium (23) and
(F) Connecting of the stabilising/compression elements (30) to the inner side (25i) of the envelope (25).

17. The method of claim 16 wherein the embedding (C) of the stabilising/compression elements (30) in the core material (20k) is effected by one or a plurality of cavities matching the stabilising/compression elements (30) being created in the provided core material (20k) and the stabilising/compression elements (30) then being inserted or introduced into the cavities.

18. The method of claim 16 wherein the embedding (C) of the stabilising/compression elements (30) in the core material (20k) is effected by the one or the plurality of stabilising/compression elements (30) being presented and then surrounded with the provided core material (20K).

19. The method of any of the preceding claims 16 to 18 wherein the partial or complete surrounding (D) with a fibre composite (21) or preform (22) of a fibre composite (21) is effected in that the embedding structure of core material (20k) and one or a plurality of stabilising/compression elements (30) is enveloped, woven-around, wrapped and/or coated with the fibre composite (21) or the preform (22) of the fibre composite (21).

20. The method of any of the preceding claims 16 to 19 wherein the impregnating (E) of the enveloped structure is effected in that the impregnating medium (23) is applied or introduced, in particular with a polymer matrix material, preferably a resin or phenolic resin, in particular as part of an infusion method and/or of an RTM method, e.g. vacuum infusion and/or in conjunction with a corresponding impregnating tool or an impregnating mould, preferably of closed design.

21. The method of any of the preceding claims 16 to 20 wherein during post-processing (F) the impregnated and enveloped structure is hardened, in particular by the application of temperature and/or pressure, preferably simultaneously with the impregnating (E).

22. The method of any of the preceding claims 16 to 21 wherein during post processing (F) the core material (20k) contained in the impregnated enveloped structure is released, in particular by application of a temperature step by melting or by chemical attacks such that at least part of the interior (201) of the hollow element (20) of the impact protection element (10) having one or more cavities remains.

23. The use of the impact protection element (10) of any of the claims 1 to 15 in a vehicle, preferably as part or in a part of the vehicle body, preferably as a sill in a motor vehicle.

## Revendications

1. Élément de protection anti-impacts (10) pour une carrosserie de véhicule destiné à encaisser et/ou dissiper une énergie cinétique lors d'un impact,
- qui comprend un élément de corps creux (20) avec un composite en fibres ou formé d'un tel composite en fibres,
- dans lequel l'élément de corps creux (20) comprend un élément de paroi antérieur (20v) tourné vers une direction d'impact attendue (X) et un élément de paroi postérieur (20h) détourné d'une direction d'impact attendue (X),
- dans lequel l'élément de corps creux (20) comporte dans son intérieur (201) un ou plusieurs éléments de stabilisation/écrasement (30),
- dans lequel lesdits un ou plusieurs éléments de stabilisation/écrasement (30) sont rapportés sur les faces intérieures (20vi, 20hi) des éléments de paroi antérieur et postérieur (20v, 20h) tourné vers et détourné de la direction d'impact attendue (X), et
a) dans lequel un ou plusieurs éléments de stabilisation/écrasement (30) sont réalisés sous la forme d'un corps creux (40), et
b) dans lequel un ou plusieurs éléments de stabilisation/écrasement (30) sont réalisés sous la forme d'un élément de paroi intermédiaire (70) à ondulations multiples.

2. Élément de protection anti-impacts (10) selon la revendication 1, dans lequel le corps creux (40) d'un élément de stabilisation/écrasement (30) est réalisé avec un diamètre ou une section constante, s'étendant en particulier depuis un côté (50h, 50ha) détourné de la direction d'impact attendue (X) vers un côté (50v, 50va) tourné vers la direction d'impact attendue (X).

3. Élément de protection anti-impacts (10) selon l'une des revendications précédentes, dans lequel le corps creux (40) d'un élément de stabilisation/écrasement (30) présente la forme d'un cylindre - en particulier avec une surface terminale ou une surface de base de forme circulaire et/ou elliptique -, d'un cube ou d'un prisme, en particulier avec des surfaces terminales sous la forme d'un polygone régulier ou irrégulier, en particulier respectivement sous une forme perpendiculaire ou oblique.

4. Élément de protection anti-impacts (10) selon l'une des revendications précédentes, dans lequel le corps creux (40) d'un élément de stabilisation/écrasement (30) est réalisé de manière conique ou en se rétrécissant, s'étendant en particulier depuis un côté (50h, 50ha) détourné de la direction d'impact attendue (X) vers un côté (50v, 50va) tourné vers la direction d'impact attendue (X).

5. Élément de protection anti-impacts (10) selon l'une des revendications précédentes 1 ou 3, dans lequel le corps creux (40) d'un élément de stabilisation/écrasement (30) présente la forme d'un tronc d'un corps géométrique, de préférence d'un tronc de cône - en particulier avec des surfaces terminales ou des surfaces de base de forme circulaire et/ou elliptique - ou d'un tronc de pyramide - en particulier avec des surfaces terminales sous la forme d'un polygone régulier ou irrégulier, s'étendant en particulier depuis un côté (50h, 50ha) détourné de la direction d'impact attendue (X) vers un côté (50v, 50va) tourné vers la direction d'impact attendue (X).

6. Élément de protection anti-impacts (10) selon l'une des revendications précédentes, dans lequel le corps creux (40) d'un élément de stabilisation/écrasement (30) est réalisé avec ou à partir d'au moins un composite en fibres.

7. Élément de protection anti-impacts (10) selon l'une des revendications précédentes, dans lequel le corps creux (40) d'un élément de stabilisation/écrasement (30) est rempli dans son intérieur (401) avec un matériau (60), en particulier avec un matériau en forme de mousse, de préférence avec un matériau en polymère, un matériau métallique, un matériau en PU ou en polyuréthane.

8. Élément de protection anti-impacts (10) selon l'une des revendications précédentes, dans lequel il est prévu un agencement d'une pluralité d'éléments de stabilisation/écrasement (30) sous la forme de corps creux (40), en particulier sous la forme d'une ou plusieurs rangées qui s'étendent perpendiculairement à la direction d'impact attendue (X) et/ou dans une direction d'extension longitudinale (Y) de l'élément de corps creux (20) de l'élément de protection anti-impacts (10).

9. Élément de protection anti-impacts (10) selon l'une des revendications précédentes, dans lequel un corps creux respectif (40) d'un élément de stabilisation/écrasement (30) en forme de corps creux est rapporté avec les faces extérieures (50va, 50ha) d'éléments de paroi antérieur ou postérieur (50v, 50h) à titre de surfaces terminales, sur les faces intérieures (20vi, 20hi) des éléments de paroi antérieur ou postérieur (20v, 20h), de l'élément de corps creux (20) de l'élément de protection anti-impacts (10), tourné vers ou détourné de la direction d'impact attendue (X).

10. Élément de protection anti-impacts (10) selon l'une des revendications précédentes, dans lequel une direction d'ondulation (U) des ondulations d'un élément de stabilisation/écrasement (30) sous la forme d'un élément de paroi intermédiaire (70) à ondulations multiples, s'étend perpendiculairement à la direction d'impact attendue (X) et/ou à une direction d'extension longitudinale (Y) de l'élément de corps creux (20) de l'élément de protection anti-impacts (10).

11. Élément de protection anti-impacts (10) selon l'une des revendications précédentes, dans lequel un élément de paroi intermédiaire (70) à ondulations multiples d'un élément de stabilisation/écrasement (30) comporte une arête antérieure (70v) et une arête postérieure (70h), qui sont rapportées sur les faces intérieures (20vi, 20hi) des éléments de paroi antérieur et postérieur (20v, 20h), de l'élément de corps creux (20) de l'élément de protection anti-impacts (10), tourné vers ou détourné de la direction d'impact attendue (X).

12. Élément de protection anti-impacts (10) selon l'une des revendications précédentes, dans lequel un élément de paroi intermédiaire (70) à ondulations multiples d'un élément de stabilisation/écrasement (30) comporte un tronçon (72) à ondulations multiples, en particulier en section transversale avec un tracé sous la forme d'une dent de scie simple ou multiple, avec des flancs obliques ou perpendiculaires, sous la forme d'un gradin simple ou multiple, sous la forme d'un ovale simple ou multiple, d'un gradin arrondi simple ou multiple, une forme d'onde simple ou multiple, une forme sinusoïdale simple ou multiple, ou une combinaison de ces formes.

13. Élément de protection anti-impacts (10) selon l'une des revendications précédentes, dans lequel un élément de paroi intermédiaire (70) a ondulations multiples d'un élément de stabilisation/écrasement (30) est réalisé avec ou à partir d'au moins un composite en fibres (71)

14. Élément de protection anti-impacts (10) selon l'une des revendications précédentes, qui est rempli dans son intérieur (201) partiellement ou totalement d'un matériau d'âme (20k), ledit matériau d'âme (20k) noyant en particulier un ou plusieurs éléments de stabilisation/écrasement (30).

15. Élément de protection anti-impacts (10) selon l'une des revendications précédentes, dans lequel un composite en fibres respectif (21, 51, 71) comprend, ou est formé par, un ou plusieurs matériaux choisis parmi le groupe qui comporte les matières plastiques renforcées par des fibres, les matériaux à base de verre, les matériaux aramides, les matériaux en fibres naturelles, les matériaux basaltiques, et leurs combinaisons.

16. Procédé pour fabriquer un élément de protection anti-impacts (10) selon l'une des revendications 1 à 15, comprenant les étapes consistant à :
(A) mettre à disposition un matériau d'âme (20k),
(B) mettre à disposition un ou plusieurs éléments de stabilisation/écrasement (30),
(C) noyer des éléments de stabilisation/écrasement (30) dans le matériau d'âme (20k),
(D) enrober partiellement ou totalement la structure obtenue dans l'étape (C), constituée d'éléments de stabilisation/écrasement (30) noyés dans un matériau d'âme (20k) avec un composite en fibres (21) ou une ébauche (22) d'un composite en fibres (21) à titre d'enveloppe (25),
(E) imprégner la structure obtenue dans l'étape (D), constituée d'éléments de stabilisation/écrasement (30) noyés dans un matériau d'âme (20k) et enrobés partiellement ou totalement avec un composite en fibres (21) ou une ébauche (22) d'un composite en fibres (21) à titre d'enveloppe (25), avec un agent d'imprégnation (23), et
(F) relier les éléments de stabilisation/écrasement (30) avec la face intérieure (25i) de l'enveloppe (25).

17. Procédé selon la revendication 16, dans lequel l'étape consistant à noyer (C) les éléments de stabilisation/écrasement (30) dans le matériau d'âme (20k) a lieu en ménageant dans le matériau d'âme (20k) mis à disposition une ou plusieurs cavités ajustées aux éléments de stabilisation/écrasement (30), et en posant ou en introduisant alors les éléments de stabilisation/écrasement (30) dans les cavités.

18. Procédé selon la revendication 16, dans lequel l'étape consistant à noyer (C) les éléments de stabilisation/écrasement (30) dans le matériau d'âme (20k) un lieu en posant au préalable lesdits un ou plusieurs éléments de stabilisation/écrasement (10), et en les noyant alors avec le matériau d'âme (20k) mis à disposition.

19. Procédé selon l'une des revendications précédentes 16 à 18, dans lequel l'étape consistant à enrober (D) partiellement ou totalement avec un composite en fibres (21) ou avec une ébauche (22) d'un composite en fibres (21) a lieu en ce que la structure à enrober formée du matériau d'âme (20k) et d'un ou plusieurs éléments de stabilisation/écrasement (30) est enveloppée, entourée d'un tressage, entouré d'un bobinage et/ou recouverte avec le composite en fibres (21) ou avec l'ébauche (22) du composite en fibres (21).

20. Procédé selon l'une des revendications précédentes 16 à 19, dans lequel l'étape consistant à imprégner (E) la structure enrobée a lieu en appliquant ou en introduisant l'agent d'imprégnation (23), en particulier un matériau de matrice en polymère et de préférence une résine ou une résine phénolique, en particulier dans le cadre d'un procédé par infusion et/ou d'un procédé RTM, par exemple une infusion sous vide et/ou en association avec un outil d'imprégnation ou un moule d'imprégnation correspondant, de préférence de configuration fermée.

21. Procédé selon l'une des revendications précédentes 16 à 20, dans lequel lors du traitement ultérieur (F), la structure imprégnée et enrobée est durcie, en particulier par application de température et/ou de pression, de préférence simultanément avec l'imprégnation (E)

22. Procédé selon l'une des revendications précédentes 16 à 21, dans lequel lors du traitement ultérieur (F), le matériau d'âme (20k) contenu dans la structure imprégnée enrobée est dissous, en particulier par fusion en appliquant une montée en température, ou par des attaques chimiques, de sorte qu'au moins une partie de l'intérieur (201) de l'élément creux (20) de l'élément de protection anti-impacts (10) demeure avec une ou plusieurs cavités.

23. Utilisation d'un élément de protection anti-impacts (10) selon l'une des revendications 1 à 15 dans un véhicule, de préférence comme partie d'une carrosserie de véhicule ou dans une partie de carrosserie du véhicule, de préférence comme longeron dans un véhicule automobile.
